# EUROPEAN PATENT APPLICATION

(11) **EP 4 819 553 A1**
(43) Date of publication of application: **07.10.2026**
(21) Application number: 25203358.4
(22) Date of filing: 19.09.2025
(51) Int. Cl.: H04L 25/02, H04L 27/26

(54) **TERMINAL AND OPERATION METHOD THEREOF**

(30) Priority: 01.04.2025 KR 20250042133
(71) Applicant: Samsung Electronics Co., Ltd., Suwon-si, Gyeonggi-do 16677 (KR)
(72) Inventor: JUNG, Youngseok, 16677 Suwon-si (KR); KIM, Joo-Han, 16677 Suwon-si (KR); JEONG, Suhwang, 16677 Suwon-si (KR); JUNG, Jaehoon, 16677 Suwon-si (KR)
(74) Representative: Marks & Clerk LLP

(57) **Abstract**

An operation method, performed by a processor of a terminal, includes identifying a first resource group corresponding to the terminal, identifying first reference signals of a first type for the first resource group, identifying channel state information, based on one or more of the first reference signals or based on a second reference signal of a second type that is associated with the first reference signals, and identifying channel characteristic information corresponding to the first resource group based on the channel state information.

## Description

### BACKGROUND

The present disclosure relates to a terminal and an operation method thereof.

In a wireless communication environment, a state of a wireless channel changes irregularly in time and frequency domains. A receiver may estimate channel characteristic information to determine a degree of distortion of a received signal which is received through a wireless channel and may restore a transmission signal from the received signal based on the estimated channel characteristic information.

However, as a mobile communication technology advances, errors in information used to estimate the channel characteristic information may have a greater impact on the accuracy of channel characteristic information estimation, so there is a need to accurately correct the errors.

### SUMMARY

It is an aspect to provide a terminal for estimating channel characteristic information with increased accuracy using a reference signal of a set type and an operation method of the terminal.

According to an aspect of one or more embodiments, there is provided an operation method, performed by a processor of a terminal, the operation method comprising identifying a first resource group corresponding to the terminal; identifying a plurality of first reference signals of a first type for the first resource group; identifying channel state information, based on at least one of the plurality of first reference signals or based on a second reference signal of a second type that is associated with the plurality of first reference signals; and identifying channel characteristic information corresponding to the first resource group based on the channel state information. The second reference signal of the second type may have a quasi-colocated relationship with the plurality of first reference signals.

According to another aspect of one or more embodiments, there is provided a terminal comprising a transceiver; a buffer; and a processor that is configured to identify a first resource group corresponding to the terminal, identify a plurality of first reference signals of a first type for the first resource group, identify channel state information determined based on at least one of the plurality of first reference signals or based on a second reference signal of a second type associated with the plurality of first reference signals, and identify channel characteristic information corresponding to the first resource group based on the channel state information. The second reference signal of the second type may have a quasi-colocated relationship with the plurality of first reference signals.

According to still another aspect of one or more embodiments, there is provided a wireless communication system comprising a terminal comprising a processor or hardware control logic; and a base station. The base station is configured to transmit, to the terminal, instruction information including information on a first resource group corresponding to the terminal, and the processor or the hardware control logic of the terminal is configured to identify the first resource group based on the instruction information received from the base station, identify a plurality of first reference signals of a first type transmitted in the first resource group, identify channel state information determined based on at least one of the plurality of first reference signals or based on a second reference signal of a second type having a quasi-colocated relationship with the plurality of first reference signals, and identify channel characteristic information corresponding to the first resource group based on the channel state information.

At least some of the above and other features of the disclosure are set out in the claims.

### BRIEF DESCRIPTION OF THE FIGURES

These and/or other aspects will become apparent and more readily appreciated from the following description of example embodiments, taken in conjunction with the accompanying drawings, in which:
FIG. 1 illustrates a system according to an example embodiment;
FIG. 2 is a diagram illustrating a process of estimating, by a terminal, channel characteristic information based on a reference signal according to an example embodiment;
FIG. 3 is a diagram illustrating a process of estimating, by a terminal, channel characteristic information based on a reference signal according to an example embodiment;
FIG. 4 is a diagram illustrating a process of estimating, by a terminal, channel characteristic information based on a reference signal according to an example embodiment;
FIG. 5 is a diagram illustrating a process of estimating, by a terminal, channel characteristic information based on a reference signal according to an example embodiment;
FIG. 6 is a diagram illustrating a process of estimating, by a terminal, channel characteristic information based on a reference signal according to an example embodiment;
FIG. 7 is a diagram illustrating a process of estimating, by a terminal, channel characteristic information based on a reference signal according to an example embodiment;
FIG. 8 is a diagram illustrating a process of estimating, by a terminal, channel characteristic information based on a reference signal according to an example embodiment;
FIG. 9 is a diagram illustrating a process of identifying, by a terminal, a change in phase on frequency and time axes according to an example embodiment;
FIG. 10 is a flowchart illustrating an operation method of a terminal according to an example embodiment; and
FIG. 11 is a block diagram illustrating a terminal according to an example embodiment.

### DETAILED DESCRIPTION

Terms used in the example embodiments are selected, as much as possible, from general terms that are widely used at present while taking into consideration the functions obtained in accordance with the present disclosure, but these terms may be replaced by other terms based on intentions of those skilled in the art, customs, emergence of new technologies, or the like. Also, in a particular case, terms that are arbitrarily selected by the applicant of the present disclosure may be used. In this case, the meanings of these terms may be described in corresponding description parts of the disclosure. Accordingly, it should be noted that the terms used herein should be construed based on practical meanings thereof and the whole content of this specification, rather than being simply construed based on names of the terms.

In the entire specification, when an element is referred to as "including" another element, the element should not be understood as excluding other elements so long as there is no special conflicting description, and the element may include at least one other element.

Throughout the specification, an expression that uses the form "at least one of a, b, or c" may include 'a only', 'b only', 'c only', 'a and b', 'a and c', 'b and c', or 'all of a, b, and c'.

A "terminal" referred to herein may be implemented as a computer or portable terminal capable of connecting to a server or other terminal via a network. In this disclosure, the computer may include, for example, a notebook, desktop, or laptop equipped with a web browser, and the portable terminal may be a wireless communication device that ensures portability and mobility and may include all types of handheld-based wireless communication devices such as communication-based terminals such as international mobile telecommunication (IMT) terminals, code division multiple access (CDMA) terminals, w-code division multiple access (W-CDMA) terminals, and long term evolution (LTE) terminals, smartphones, and/or tablet PCs, for example.

In the following description, example embodiments of the present disclosure will be described in detail with reference to the accompanying drawings so that those skilled in the art can easily carry out the present disclosure. However, the present disclosure may be embodied in many different forms and is not limited to the example embodiments described herein.

Additional aspects of example embodiments will be set forth in part in the description which follows and, in part, will be apparent from the description or may be learned by practice of the disclosure.

According to example embodiments, a terminal may adaptively determine which signal to use as channel state information based on a channel environment and a processing capability of the terminal and, as a result, may reduce a computational burden and estimate channel characteristic information with increased accuracy, thereby ensuring stable communication performance.

According to example embodiments, an accuracy of estimation of channel characteristic information may be improved by more accurately compensating for a timing offset that occurs due to an inaccuracy of time synchronization, a frequency offset occurring due to an inaccuracy of a frequency of a carrier generated using an oscillator, and/or a movement of a terminal.

However, advantages of the present disclosure are not limited to those described above and other advantages may be made apparent to those skilled in the art from the following description of the accompanying claims.

Hereinafter, the example embodiments of the present disclosure will be described with reference to the accompanying drawings.

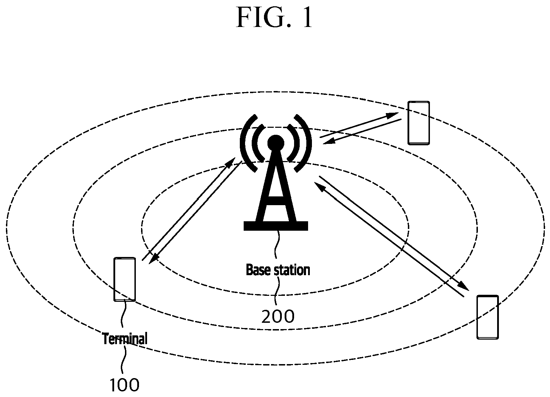

FIG. 1 illustrates a system according to an example embodiment.

Referring to FIG. 1, a wireless communication system may include one or more terminals, for example, a terminal 100 and a base station 200. It will be understood by those skilled in the art related to the present example embodiment that other general elements may also be included in addition to the elements illustrated in FIG. 1.

According to an example embodiment, the terminal 100 may be a wireless communication device and may refer to various devices configured to communicate with the base station 200 to transmit and receive data and/or control information. For example, the terminal 100 may include user equipment, a mobile station (MS), a mobile terminal (MT), a user terminal (UT), a subscribe station (SS), a wireless device, a portable device, and the like.

According to an example embodiment, the base station 200 may refer to a fixed station that communicates with the terminal 100 and/or with another base station to transmit and receive data and/or control information. For example, the base station 200 may include a Node B, a next generation Node B (gNB), an evolved Node B (eNB), a base transceiver system (BTS), an access point (AP), and the like.

According to an example embodiment, the terminal 100 may communicate with a base station within a cell coverage area of the base station 200. For example, the terminal 100 and the base station 200 may communicate via a downlink channel and an uplink channel. When the terminal 100 and the base station 200 communicate via the downlink channel, the terminal 100 and the base station 200 correspond to a wireless receiver and a wireless transmitter, respectively. When the terminal 100 and the base station 200 communicate via the uplink channel, the terminal 100 and the base station 200 may correspond to a wireless transmitter and a wireless receiver, respectively.

According to an example embodiment, a wireless communication network between the terminal 100 and the base station 200 may support communications between multiple users by sharing available network resources. For example, in the wireless communication network, information may be transmitted in various ways, such as a code division multiple access (CDMA), a frequency division multiple access (FDMA), a time division multiple access (TDMA), an orthogonal frequency division multiple access (OFDMA), a single carrier frequency division multiple access (SC-FDMA), and the like.

According to an example embodiment, the base station 200 may transmit a downlink signal (DLS) containing data to the terminal 100 through at least one antenna port. For example, the base station 200 may precode data signals (or data symbols) and reference signals (or reference symbols) and transmit the precoded data signals and the precoded reference signals to the terminal 100 through a downlink channel.

In this instance, the reference signal may be a signal used for channel estimation of the data signal and may be referred to as a pilot. For example, the reference signal may include a demodulation reference signal (DMRS), a common reference signal (CRS), a channel state information reference signal (CSI-RS), or the like, used for channel estimation of a specific terminal. The reference signal may include various types of signals in addition to the signals described above, and embodiments are not limited to those described above.

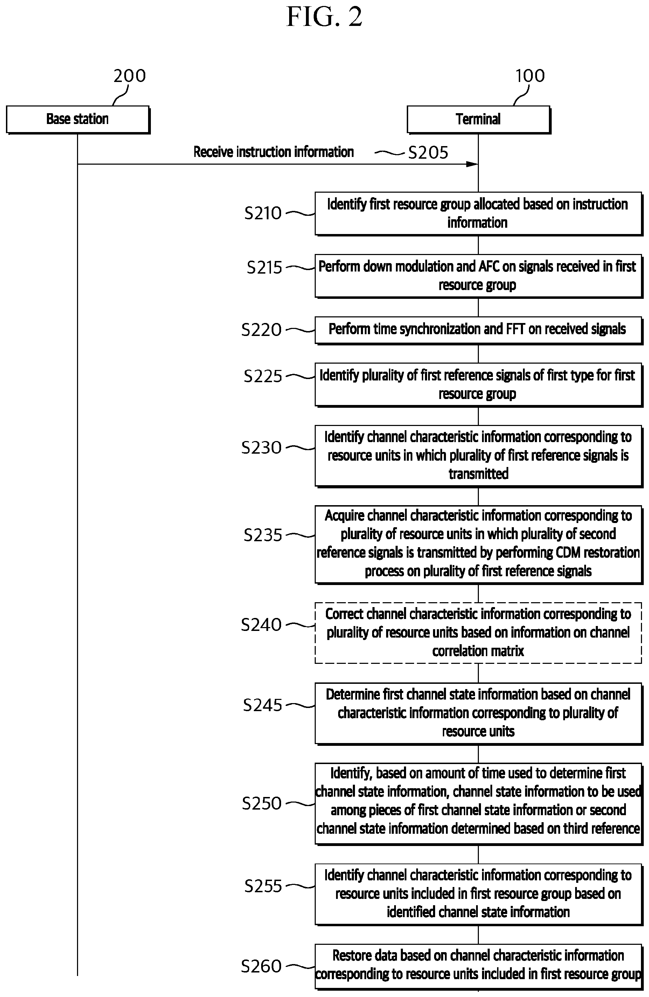

FIG. 2 is a diagram illustrating a process of estimating, by the terminal 100, channel characteristic information based on a reference signal according to an example embodiment.

In operation S205, the terminal 100 may receive instruction information from the base station 200. For example, the terminal 100 may receive downlink control information (DCI) from the base station 200 through a physical downlink control channel (PDCCH).

In this instance, the instruction information may include information on a location of a resource in which data is to be transmitted, information on a modulation method and coding rate used, identification information used when requesting retransmission, configuration information on the reference signal for channel estimation in a physical downlink shared channel (PDSCH), and the like.

In operation S210, the terminal 100 may identify a first resource group allocated based on the instruction information. For example, the terminal 100 may identify the allocated first resource group based on the DCI received from the base station 200.

In this instance, the resource group may indicate a resource block (RB). The resource group may be set in various forms or configurations in addition to a resource block and embodiments are not limited to the above.

In operation S215, the terminal 100 may perform a down modulation (e.g., down conversion) and an automatic frequency control (AFC) on signals received in the first resource group. For example, the terminal 100 may generate a subcarrier using an oscillator and convert the generated subcarrier into a baseband signal by multiplying the subcarrier by analog signals on a time axis. Subsequently, the terminal 100 may perform the AFC by analyzing a frequency offset in a baseband signal. The terminal 100 may detect an offset by comparing a frequency of the baseband signal with a reference frequency and may fine-tune a frequency of the oscillator to compensate for the offset.

In this instance, in addition to effects of the channel, a phase change or rotation of the signal on the time axis according to the frequency offset may occur during a down modulation process due to movement of the terminal 100 and/or due to inaccuracy in the frequency of the carrier generated using the oscillator.

In operation S220, the terminal 100 may perform a time synchronization and fast Fourier transform (FFT) on the received signals. For example, the terminal 100 may perform a time synchronization process based on an OFDM symbol and then perform the FFT, thereby converting the signals converted to baseband signals from a time domain to a frequency domain.

In this example, when changing the baseband signal on the time axis into a signal on the frequency axis using the FFT, a timing offset may occur, which may result in a phase change or rotation of the signal on the frequency axis. In a process of compensating for a phase change during a period corresponding to a cyclic prefix (CP) length of a subcarrier frequency to maintain a phase continuity between OFDM symbols after the FFT, a phase change of the signal on the time axis may occur according to the frequency offset.

The phase change on the time axis due to the frequency offset and the phase change on the frequency axis due to the timing offset that may occur in a process of performing operation S215 and operation S220 may have a relatively significant impact on an accuracy of estimating channel characteristic information of the terminal 100 as mobile communication technology advances. For example, unlike a 4^{th} generation mobile communication (e.g., long term evolution (LTE)), a 5^{th} generation mobile communication (e.g., new radio (NR)) uses a DMRS that exists within a specific symbol or a specific resource unit instead of a cell specific reference signal (CRS). In this example, since the DMRS is mapped only to a specific symbol within a slot, continuity between slots may not be guaranteed. In an LTE CRS, since precoding is not applied or the same precoding is applied, the terminal 100 may estimate channel characteristic information using information from a previous slot. However, in NR, precoding is applied in more detailed units, and if precoding is changed, estimation of channel characteristic information using information from the previous slot may be restricted. Accordingly, when the terminal 100 performs interpolation or extrapolation to estimate the channel characteristic information in the time domain or frequency domain in which the DMRS does not exist, an offset may accumulate as a distance from a domain including the DMRS increases, and if the frequency offset or the timing offset exists, such offsets may be further amplified. As mobile communication technology advances, a distance between symbols may be reduced when a modulation order increases, and when a transmission rank increases, interference may increase as multiple signals are transmitted and received simultaneously. Due to this interference, a probability of a signal error may further increase even when the same level of frequency offset or timing offset exists, and accordingly, it would be advantageous to more accurately correct the frequency offset and the timing offset. However, the noted impact on the accuracy of estimating channel characteristic information of the terminal 100 is not limited to 5^{th} generation mobile communication.

In operation S225, the terminal 100 may identify a plurality of first reference signals of a first type for the first resource group. For example, the terminal 100 may identify a plurality of resource units in which a reference signal of the first type is located, in the first resource group allocated based on reference signal configuration information. Subsequently, the terminal 100 may identify the plurality of first reference signals of the first type transmitted on the plurality of resource units on the frequency axis.

In an embodiment, a resource unit may indicate a resource element (RE). In some embodiments, the resource unit may be set in various forms or configurations in addition to the resource element, and embodiments are not limited to the above. In an embodiment, the reference signal of the first type may indicate the demodulation reference signal (DMRS). In some embodiments, the reference signal of the first type may be set to a reference signal of various types in addition to the DMRS, and embodiments are not limited to the above.

In operation S230, the terminal 100 may identify channel characteristic information corresponding to resource units in which the plurality of first reference signals is transmitted. For example, the terminal 100 may acquire channel characteristic information corresponding to the resource units in which the plurality of first reference signals is transmitted by comparing the reference signal transmitted by the base station 200 to the reference signal received by the terminal 100.

In operation S235, the terminal 100 may acquire channel characteristic information corresponding to a plurality of resource units in which a plurality of second reference signals is transmitted by performing a code division multiplexing (CDM) restoration process on the plurality of first reference signals. Specifically, when the plurality of first reference signals is transmitted using CDM, the terminal 100 may perform despreading on the received plurality of first reference signals using a orthogonal cover code (OCC). The OCC may be predefined. The terminal 100 may thus acquire the channel characteristic information corresponding to the plurality of resource units in which the plurality of second reference signals is transmitted. The plurality of resource units in which the plurality of second reference signals is transmitted may be adjacent to the resource units in which the plurality of first reference signals is transmitted.

For example, the base station 200 may insert a product of predefined reference signal values *x_{i,m}* and *w_{i,m,t}* in a resource unit corresponding to a t-th transmission antenna, an i-th symbol, and an m-th subcarrier and transmit the resource unit having the inserted product to the terminal 100. The terminal 100 may receive a signal *y_{i,m,r}* in a resource unit corresponding to an r-th reception antenna, the i-th symbol, and the m-th subcarrier. In this example, in *"x_{i,m} *w_{i,m,t}"* transmitted by the base station 200, an amplitude may be attenuated or amplified, a phase of a signal may change, and/or noise may be added due to the effect of the channel. Accordingly, *y_{i,m,r}* may be expressed as shown in Equation 1 below. Thereafter, the terminal 100 may identify channel characteristic information *ĥ*_{*i,m*+1*,r,t*} of the resource unit corresponding to the i-th symbol and an (*m+* 1)-th subcarrier using *x_{i,m}, w_{i,m,t,} y_{i,m,r}, x*_{*i,m*+2}, *w*_{*i,m+*2,}*ₜ,* and *y*_{*i,m*+2,*r*} as shown in Equation 2. [Equation 1] ${y}_{i , m , r} = {\sum }_{t} \left({h}_{i , m , r , t}*{x}_{i , m}*{w}_{i , m , t}\right) + {z}_{i , m , r}$ [Equation 2] ${\hat{h}}_{i , m + 1 , r , t} = \frac{1}{\left({\left|{w}_{i , m , r}\right|}^{2}+{\left|{w}_{i , m + 2 , r}\right|}^{2}\right)} \left(\frac{{y}_{i , m , r}}{{x}_{i , m}}{w}_{i , m , t}^{*}+\frac{{y}_{i , m + 2 , r}}{{x}_{i , m + 2}}{w}_{i , m + 2 , t}^{*}\right)$

In Equation 1 and Equation 2, *h*_{*i,m*+1*,r,t*} denotes a channel coefficient including a frequency response, a channel gain, and phase information, and *z_{i,m,r}* denotes noise or channel noise. In addition, *ĥ*_{*i,m*+1,*r,t*} denotes information obtained by estimating channel characteristics of resource units adjacent to resource units in which *y_{i,m,r}* and *y*_{*i,m*+2*,r*} are transmitted among the plurality of first reference signals, and may be referred to as channel characteristic information, a channel characteristic value, channel estimation information, a channel estimation value, or the like. However, the terminology referring thereto is not limited to those described above. In an embodiment, Equation 2 may correspond to a process of performing operation S230 and operation S235 by the terminal 100.

In the following description, in a case in which a transmission and reception antenna index is clearly specified, the transmission and reception antenna index will be omitted.

In operation S240, the terminal 100 may correct the channel characteristic information corresponding to the plurality of resource units based on information on a channel correlation matrix. For example, the terminal 100 may determine a covariance matrix based on the first channel correlation matrix on the frequency axis and the second channel correlation matrix on the time axis and minimize an estimation offset of the channel characteristic information using a minimum mean square error (MMSE) technique based on the covariance matrix.

In this example, the first channel correlation matrix on the frequency axis and the second channel correlation matrix on the time axis may include, but are not limited to, the channel correlation matrix determined based on the reference signals of the first type received by the terminal 100 in a second resource group that is previous to the first resource group or the channel correlation matrix determined based on a second reference signal of a second type having a quasi-colocated (QCL) relationship with the plurality of first reference signals.

In some embodiments, operation S240 may be omitted. In a case in which operation S240 is omitted, uncorrected channel characteristic information may be used in operation S245 and thereafter.

In operation S245, the terminal 100 may determine first channel state information based on channel characteristic information corresponding to the plurality of resource units. Specifically, based on the channel characteristic information corresponding to the plurality of resource units, the terminal 100 may determine at least one of information on a first phase change value on the time axis according to the frequency offset, information on a second phase change value on the frequency axis according to the timing offset, information on a delay spread, information on a channel power delay profile, information on the first channel correlation matrix on the frequency axis, information on a Doppler spread, information on the second channel correlation matrix on the time axis, or information on a signal-to-noise ratio (SNR).

As an example, for each of a plurality of multiples that is set, the terminal 100 may identify resource unit pairs spaced apart at symbol intervals of the plurality of multiples among the plurality of resource units and identify phase change values per symbol interval based on a phase difference value between pieces of channel characteristic information corresponding to each of the resource unit pairs. As used in this specification, the term "pair" may denote two. In an embodiment, the resource unit pairs may be two resource units that are spaced apart at a symbol interval of the plurality of multiples. Subsequently, the terminal 100 may identify representative values of the phase change values per symbol interval corresponding to the plurality of multiples based on the phase change values per symbol interval identified for each of the plurality of multiples and may determine the first phase change value on the time axis according to the frequency offset based on the representative values of the phase change values per symbol interval corresponding to the plurality of multiples. **In** this example, the representative value of the phase change values per symbol interval corresponding to the plurality of multiples may be determined to be an average value of the phase change values per symbol interval corresponding to the plurality of multiples as shown in Equation 3 below. [Equation 3] ${θ}_{t , d} = \frac{1}{d ⋅ {N}_{d}} {\sum }_{\left(j-i\right) = d} angle \left(\frac{{\hat{h}}_{i , m}^{*} {\hat{h}}_{j , m}}{\left|{\hat{h}}_{i , m}\right| \left|{\hat{h}}_{j , m}\right|}\right)$

**In** Equation 3, d denotes a set multiple, *i* and *j* denote symbol indices corresponding to each of resource unit pairs spaced apart at d-symbol intervals with identical precoding applied, and *N_{d}* denotes a number of phase change values per symbol interval corresponding to *d.* **In** addition, *ĥ_{i,m}* denotes channel characteristic information of a resource unit corresponding to the i-th symbol and the m-th subcarrier, *ĥ_{j,m}* denotes channel characteristic information of a resource unit corresponding to a j-th symbol and the *m-*th subcarrier, and *θ_{t,d}* denotes a representative value of the phase change values per symbol interval corresponding to d.

As another example, for each of a plurality of multiples that is set, the terminal 100 may identify resource unit pairs spaced apart at subcarrier intervals of the plurality of multiples among the plurality of resource units and may identify phase change values per subcarrier interval based on a phase difference value between pieces of channel characteristic information corresponding to each of the resource unit pairs. Subsequently, the terminal 100 may identify the representative values of the phase change values per subcarrier interval corresponding to the plurality of multiples based on the phase change values per subcarrier interval identified for each of the plurality of multiples and may determine the second phase change value on the frequency axis according to the timing offset based on the representative values of the phase change values per subcarrier interval corresponding to the plurality of multiples. **In** this example, the representative value of the phase change values per subcarrier interval corresponding to the plurality of multiples may be determined to be an average value of the phase change values per subcarrier interval corresponding to the plurality of multiples as shown in Equation 4 below. [Equation 4] ${θ}_{f , d} = \frac{1}{d ⋅ {N}_{d}} {\sum }_{\left(n-m\right) = d} angle \left(\frac{{\hat{h}}_{i , m}^{*} {\hat{h}}_{i , n}}{\left|{\hat{h}}_{i , m}\right| \left|{\hat{h}}_{i , n}\right|}\right)$

In Equation 4, *d* denotes a set multiple, *m* and *n* denote symbol indices corresponding to each of resource unit pairs spaced apart at d-subcarrier intervals with identical precoding applied, and *N_{d}* denotes a number of phase change values per subcarrier interval corresponding to *d.* In addition, *ĥ_{i,m}* denotes channel characteristic information of a resource unit corresponding to the i-th symbol and the m-th subcarrier, *ĥ_{i,n}* denotes channel characteristic information of a resource unit corresponding to the i-th symbol and an n-th subcarrier, and *θ_{f,d}* denotes a representative value of the phase change values per subcarrier interval corresponding to d.

As another example, the terminal 100 may calculate a power value of the channel characteristic information according to a delay spread for each multi-path of a channel based on the channel characteristic information corresponding to the plurality of resource units. Through this calculated power value, the terminal 100 may determine a channel power delay profile that reflects a multi-path delay characteristic of the channel.

As another example, the terminal 100 may determine a root mean square (RMS) delay spread, which represents a distribution of delay when a signal arrives through multiple paths, based on the information on the channel power delay profile.

As another example, in an embodiment, the terminal 100 may determine the first channel correlation matrix on the frequency axis based on the information on the RMS delay spread under an assumption of a uniform delay profile or an exponential delay profile. In some embodiments, the terminal 100 may determine values of the first channel correlation matrix on the frequency axis based on the information on the channel power delay profile as shown in Equation 5 below. [Equation 5] ${r}_{f} \left(k\right) = {\sum }_{i = 0}^{L - 1} {P}_{i} {e}^{- jπk Δ {fτ}_{i}}$

In Equation 5, *τᵢ* denotes an i-th delay spread, L denotes a number of delay taps, and Δ*f* denotes subcarrier spacing. In addition, *Pᵢ* denotes power in an i-th delay, and *r_{f}*(*k*) denotes a frequency channel correlation value of a k-subcarrier spacing interval.

As another example, the terminal 100 may determine the RMS Doppler spread representing a distribution of Doppler shift occurring due to a relative velocity between a transmitter and a receiver based on the channel characteristic information corresponding to the plurality of resource units.

As another example, the terminal 100 may determine the second channel correlation matrix on the time axis based on information on the RMS Doppler spread.

As another example, the terminal 100 may determine the SNR based on the channel characteristic information corresponding to the plurality of resource units as shown in Equations 6 and 7 below. In this instance, Equation 7 may be applied when power for each transmission antenna is to be obtained without using channel estimation. In a case of 5G NR, when wideband precoding is applied and two ports are included in a CDM group, in response to a conversion into the time domain, signals of other antenna ports may be distributed to a long delay region so that a power value of the desired transmission antenna may be obtained. [Equation 6] ${SNR}_{r} \left[dB\right] = {log}_{10} \frac{{P}_{Y , r} - {P}_{N , r}}{{P}_{N , r}} = {log}_{10} \frac{{P}_{S , r}}{{P}_{Y , r} - {P}_{S , r}} = {log}_{10} \frac{{P}_{S , r}}{{P}_{N , r}}$ [Equation 7] ${SNR}_{r , t} \left[dB\right] = {log}_{10} \frac{{P}_{S , r , t}}{{P}_{Y , r} - {\sum }_{t} {P}_{S , r , t}} = {log}_{10} \frac{{P}_{S , r , t}}{{P}_{N , r}}$ [Equation 8] ${P}_{N , r} = {{\sum }_{i , m} \left‖{y}_{i , m , r}-{\sum }_{t} {\hat{h}}_{i , m , r , t} {w}_{i , m , t} {x}_{i , m}\right‖}^{2}$ [Equation 9] ${P}_{S , r} = {\sum }_{i , m} {\sum }_{t} {\left‖{\hat{h}}_{i , m , r , t}\right‖}^{2}$ [Equation 10] ${P}_{S , r , t} = {\sum }_{i , m} {\left‖{\hat{h}}_{i , m , r , t}\right‖}^{2}$

In Equations 6 through 10, *P_{Y,r}* denotes a received signal power at an r-th reception antenna, *P_{S,r}* denotes a sum of transmitted signal power at the r-th reception antenna, *P_{S,r,t}* denotes a t-th transmitted signal power at the r-th reception antenna, and *P_{N,r}* denotes noise power at the r-th reception antenna. In addition, *y_{i,m,r}* denotes a received signal at the r-th reception antenna in an i-th OFDM symbol and the m-th subcarrier, *ĥ_{i,m,r,t}* denotes channel characteristic information of a t-th transmission antenna and the r-th reception antenna in the i-th OFDM symbol and the m-th subcarrier, *w_{i,m,t}* denotes a CDM sequence value in the i-th OFDM symbol and the m-th subcarrier, and *x_{i,m}* denotes a DMRS sequence value in the i-th OFDM symbol and the m-th subcarrier.

According to an example embodiment, the terminal 100 may determine the first phase change value on the time axis according to the frequency offset based on whether a reference, which is set for a distribution and a size of the phase change values per symbol interval, is satisfied. For example, when at least one of a first condition that a value representing a distribution of the representative values of the phase change values per symbol interval corresponding to the plurality of multiples is identified to be greater than a first threshold, a second condition that a value representing a distribution of phase change values per symbol interval identified for a first multiple among the plurality of multiples is identified to be greater than a second threshold, and a third condition that a representative value of phase change values per symbol interval corresponding to a second multiple among the plurality of multiples is identified not to be included in a set first range is satisfied, the terminal 100 may determine the first phase change value on the time axis according to the frequency offset to be zero. When the first condition, the second condition, and the third condition are not satisfied, the terminal 100 may determine the first phase change value to be one of the representative values of the phase change values per symbol interval corresponding to the plurality of multiples and an average value of the representative values of the phase change values per symbol interval corresponding to the plurality of multiples.

In this instance, the value representing the distribution of the representative values of the phase change values per symbol interval corresponding to the plurality of multiples or the value representing the distribution of the phase change values per symbol interval may include, but are not limited to, a variance, a standard deviation, or an outage probability.

When the frequency offset occurs due to movement of the terminal 100 or an inaccuracy in the frequency of the carrier generated using the oscillator, the phase change values per symbol interval are likely to appear uniform. Accordingly, when at least one of the first condition, the second condition, and the third condition is satisfied, that is, when the phase change values per symbol interval are not uniform, the terminal 100 may determine that a phase change on the time axis is caused by channel influence and not by an offset in a process of down modulation and AFC and may determine the phase change on the time axis to be zero. Through this determination process, the terminal 100 may estimate the channel characteristic information with increased accuracy.

According to an example embodiment, the terminal 100 may determine the second phase change value on the frequency axis according to the timing offset based on whether a reference, which is set for a distribution and a size of the phase change values per subcarrier interval, is satisfied. For example, when at least one of a fourth condition that a value representing a distribution of the representative values of the phase change values per subcarrier interval corresponding to the plurality of multiples is identified to be greater than the first threshold, a fifth condition that a value representing a distribution of phase change values per subcarrier interval identified for the first multiple among the plurality of multiples is identified to be greater than the second threshold, and a sixth condition that a representative value of phase change values per subcarrier interval corresponding to the second multiple among the plurality of multiples is identified not to be included in the first range is satisfied, the terminal 100 may determine the second phase change value on the frequency axis according to the timing offset to be zero. When the fourth condition, the fifth condition, and the sixth condition are not all satisfied, the terminal 100 may determine the second phase change value to be one of the representative values of the phase change values per subcarrier interval corresponding to the plurality of multiples and an average value of the representative values of the phase change values per subcarrier interval corresponding to the plurality of multiples.

In this instance, the value representing the distribution of the representative values of the phase change values per subcarrier interval corresponding to the plurality of multiples or the value representing the distribution of the phase change values per subcarrier interval may include, but are not limited to, a variance, a standard deviation, or an outage probability.

When the timing offset occurs due to an inaccuracy in the time synchronization of the terminal 100, the phase change values per subcarrier interval are likely to appear uniform. Accordingly, when at least one of the fourth condition, the fifth condition, and the sixth condition is satisfied, that is, when the phase change values per subcarrier interval are not uniform, the terminal 100 may determine that the phase change on the frequency axis is caused by channel influence and not by an offset in a process of time synchronization and FFT and may determine the phase change on the frequency axis to be zero. Through this determination process, the terminal 100 may estimate the channel characteristic information with increased accuracy.

According to an example embodiment, the terminal 100 may filter the representative values of the phase change values per symbol interval corresponding to the plurality of multiples based on whether a reference, which is set for a distribution and a size of the phase change values per symbol interval, is satisfied. For example, when the value representing the distribution of the phase change values per symbol interval identified for the first multiple among the plurality of multiples is greater than the first threshold, the terminal 100 may determine the first phase change value on the time axis according to the frequency offset irrespective of the representative value of the phase change values per symbol interval corresponding to the first multiple. When the representative value of the phase change values per symbol interval corresponding to the second multiple among the plurality of multiples is not included in a set second range, the terminal 100 may determine the first phase change value on the time axis according to the frequency offset irrespective of the representative value of the phase change values per symbol interval corresponding to the second multiple.

According to an example embodiment, the terminal 100 may filter the representative values of the phase change values per subcarrier interval corresponding to the plurality of multiples based on whether a reference, which is set for a distribution and a size of the phase change values per subcarrier interval, is satisfied. For example, when the value representing the distribution of the phase change values per subcarrier interval identified for a third multiple among the plurality of multiples is greater than a third threshold, the terminal 100 may determine the second phase change value on the frequency axis according to the timing offset irrespective of a representative value of the phase change values per subcarrier interval corresponding to the third multiple. When a representative value of the phase change values per subcarrier interval corresponding to a fourth multiple among the plurality of multiples is not included in the second range, the terminal 100 may determine the second phase change value on the frequency axis according to the timing offset irrespective of the representative value of the phase change values per subcarrier interval corresponding to the fourth multiple.

According to an example embodiment, the terminal 100 may determine the first channel state information further based on a plurality of fourth reference signals of the first type transmitted in the second resource group that is previous to the first resource group. For example, the terminal 100 may identify, from a database, information on the plurality of fourth reference signals of the first type transmitted in the second resource group that is previous to the first resource group. Subsequently, the terminal 100 may determine at least one of the information on the delay spread, the information on the channel power delay profile, the information on the first channel correlation matrix, the information on the Doppler spread, the information on the second channel correlation matrix, or the information on the SNR by applying a technique such as infinite impulse response (IRR) filtering, moving average, or the like to the channel characteristic information determined based on the plurality of first reference signals and the channel characteristic information determined based on the plurality of fourth reference signals.

In operation S250, based on an amount of time used to determine the first channel state information, the terminal 100 may identify channel state information to be used among the first channel state information or second channel state information determined based on a third reference signal of a second type associated with the plurality of first reference signals. Specifically, based on the channel characteristic information corresponding to the plurality of resource units, the terminal 100 may identify an amount of time used to determine at least one of the information on the delay spread, the information on the channel power delay profile, the information on the first channel correlation matrix, the information on the Doppler spread, the information on the second channel correlation matrix, or the information on the SNR. Thereafter, the terminal 100 may determine to use the first channel state information when the used amount of time is less than or equal to a set threshold and may determine to use the second channel state information determined based on the third reference signal of the second type when the used amount of time is greater than the set threshold.

For example, the terminal 100 may identify that the amount of time used to determine the information on the delay spread based on the channel characteristic information corresponding to the plurality of resource units is less than or equal to the set threshold. Accordingly, the terminal 100 may determine to identify the channel characteristic information using the information on the delay spread determined based on the channel characteristic information corresponding to the plurality of resource units.

As another example, the terminal 100 may identify that the amount of time used to determine the information on the first channel correlation matrix based on the channel characteristic information corresponding to the plurality of resource units is greater than the set threshold. Accordingly, the terminal 100 may determine to identify the channel characteristic information using the information on the first channel correlation matrix determined based on the third reference signal of the second type and may identify the information on the first channel correlation matrix stored in the database.

In this instance, the third reference signal of the second type associated with the plurality of first reference signals may indicate a reference signal having a QCL relationship with the first reference signal. For example, the third reference signal of the second type may include, but is not limited to, a tracking reference signal (TRS) that shares similar spatial/frequency characteristics with a demodulation reference signal.

As such, based on the amount of time used to determine each of the information on the delay spread, the information on the channel power delay profile, the information on the first channel correlation matrix, the information on the Doppler spread, the information on the second channel correlation matrix, and the information on the SNR, the terminal 100 may determine, for each piece of information, whether to use information determined based on the demodulation reference signal received or information determined and stored in a database based on the tracking reference signal previously received. Accordingly, the terminal 100 may adaptively process signals according to a channel environment and a processing capability of the terminal. As a result, the terminal 100 may estimate channel characteristic information with increased accuracy while reducing computational burden, thereby ensuring stable communication performance.

In operation S255, the terminal 100 may identify channel characteristic information corresponding to resource units included in the first resource group based on the identified channel state information. Specifically, the terminal 100 may determine channel characteristic information corresponding to resource units included in a resource group based on the channel characteristic information and the channel state information corresponding to the plurality of resource units in which the plurality of second reference signals is transmitted.

As an example, the terminal 100 may calculate the channel characteristic information corresponding to the resource units included in the first resource group by performing interpolation or extrapolation in the frequency domain and the time domain based on the channel characteristic information corresponding to the plurality of resource units in which the plurality of second reference signals is transmitted.

As another example, the terminal 100 may identify, among the resource units included in the first resource group, a first resource unit and a second resource unit in which a fourth reference signal among the plurality of first reference signals is transmitted, and may identify channel characteristic information corresponding to the second resource unit, a first symbol index and a first subcarrier index corresponding to the first resource unit, and a second symbol index and a second subcarrier index corresponding to the second resource unit. Subsequently, the terminal 100 may acquire the channel characteristic information corresponding to the first resource unit, by applying the first phase change value by the first symbol index and the second phase change value by the first subcarrier index to a value obtained by inputting, to a channel estimation algorithm, a value which is obtained by inversely applying the first phase change value by the second symbol index and inversely applying the second phase change value by the second subcarrier index to the channel characteristic information corresponding to the second resource unit, as shown in Equation 11 below. [Equation 11] ${\hat{h}}_{k , l , out} = exp \left(k\times {θ}_{t}\right) exp \left(l\times {θ}_{f}\right) f \left(\left\{exp\left(-i\times {θ}_{t}\right)exp\left(-j\times {θ}_{f}\right){\hat{h}}_{i , j , in}\right\}\right)$

In Equation 11, *ĥ_{k,l,out}* denotes the channel characteristic information corresponding to the first resource unit, *ĥ_{i,j,in}* denotes the channel characteristic information corresponding to the second resource unit, and *f* denotes the channel estimation algorithm. In addition, *k, l, i,* and *j* denote the first symbol index and the first subcarrier index corresponding to the first resource unit and the second symbol index and the second subcarrier index corresponding to the second resource unit, respectively. Also, *θₜ* denotes the first phase change value on the time axis according to the frequency offset and *θ_{f}* denotes the second phase change value on the frequency axis according to the timing offset.

As another example, the terminal 100 may acquire an auto-covariance matrix and a cross-covariance matrix on the frequency axis using Equation 5. Subsequently, the terminal 100 may calculate the channel characteristic information corresponding to the resource units included in the first resource group by using a minimum mean square error (MMSE) technique based on the auto-covariance matrix and the cross-covariance matrix on the frequency axis and the information on the channel power delay profile.

As another example, when an RMS delay spread value is less than or equal to a set threshold, the terminal 100 may determine that frequency selective fading is uniform and thus, may calculate the channel characteristic information corresponding to the resource units included in the first resource group using a relatively simple technique such as linear interpolation. Conversely, when the RMS delay spread value is greater than the set threshold, the terminal 100 may determine that the frequency selective fading is relatively large and thus, may calculate the channel characteristic information corresponding to the resource units included in the first resource group using a complex technique such as spline interpolation, Wiener filtering, or the like.

As another example, when an RMS Doppler spread value is less than or equal to a set threshold, the terminal 100 may determine that the channel environment changes at a relatively low speed and thus, may correct the channel characteristic information by applying a technique such as a moving average and the like to channel characteristic information in multiple slots. Conversely, when the RMS Doppler spread value is greater than the set threshold, the terminal 100 may determine that the channel environment changes at a relatively high speed and thus, may correct the channel characteristic information by applying a technique such as Kalman filtering.

As another example, when an SNR value is less than or equal to a set threshold, the terminal 100 may determine that noise has a relatively small effect and thus, may not correct the channel characteristic information. Conversely, when the SNR value is greater than the set threshold, the terminal 100 may determine that noise has a relatively large effect. When the noise has a relative large effect, the terminal 100 may determine a covariance matrix based on the first channel correlation matrix on the frequency axis and the second channel correlation matrix on the time axis and use the MMSE technique based on the covariance matrix and the SNR to minimize an estimation offset of the channel characteristic information.

According to an example embodiment, the terminal 100 may identify the channel characteristic information based on different channel state information depending on whether identical precoding is applied for each resource group included in the first resource group. For example, in an embodiment, when different precoding is applied for each resource block included in the first resource group, the terminal 100 may determine the information on the first channel correlation matrix on the frequency axis based on at least one of the information on the delay spread or the information on the channel power delay profile and may determine the channel characteristic information corresponding to the first resource group based on the information on the first channel correlation matrix. In some embodiments, when identical precoding is applied to subcarriers included in the first resource group, the terminal 100 may determine the channel characteristic information corresponding to the first resource group based on at least one of the information on the delay spread or the information on the channel power delay profile.

However, this operation is merely an example, and the terminal 100 may determine the channel characteristic information corresponding to the first resource group based on state information differently from the foregoing examples when the identical precoding is applied for each resource group or when the different precoding is applied for each resource group.

In operation S260, the terminal 100 may restore data based on the channel characteristic information corresponding to the resource units included in the first resource group. Specifically, the terminal 100 may identify a plurality of first symbol values included in the resource units, acquire a plurality of second symbol values obtained by correcting channel distortion of the plurality of first symbol values based on the channel characteristic information, and demodulate the plurality of second symbol values, thereby acquiring data.

For example, the terminal 100 may identify PDSCH data or a symbol value included in a resource unit corresponding to a k-th symbol and an *l*-th subcarrier and may acquire a symbol value corrected using channel characteristic information corresponding to the *k*-th symbol and the *l*-th subcarrier as shown in Equation 12 below. Subsequently, the terminal 100 may determine a bit value corresponding to the corrected symbol value based on information on a modulation method and a coding rate used and included in the instruction information. [Equation 12] ${\hat{x}}_{k , l} = \frac{{y}_{k , l}}{{\hat{h}}_{k , l}}$

In Equation 12, *y_{k,1}* denotes the PDSCH data or the symbol value received by the terminal 100, *ĥ_{k,l}* denotes the channel characteristic information, and *x̂_{k,l}* denotes the corrected symbol value. In addition, the information on the used modulation method and coding rate included in the instruction information may include information on quadrature phase shift keying (QPSK), 16-quadrature amplitude modulation (16-QAM), 64-QAM, or 256-QAM. The above technique has been described for a case of a single transmission antenna and a single reception antenna, as described above. However, it will be apparent to those skilled in the art that the aforementioned technique may also be applied in a case of a plurality of transmission antennas and a plurality of reception antennas in addition to the case of the single transmission antenna and the signal reception antenna as described above.

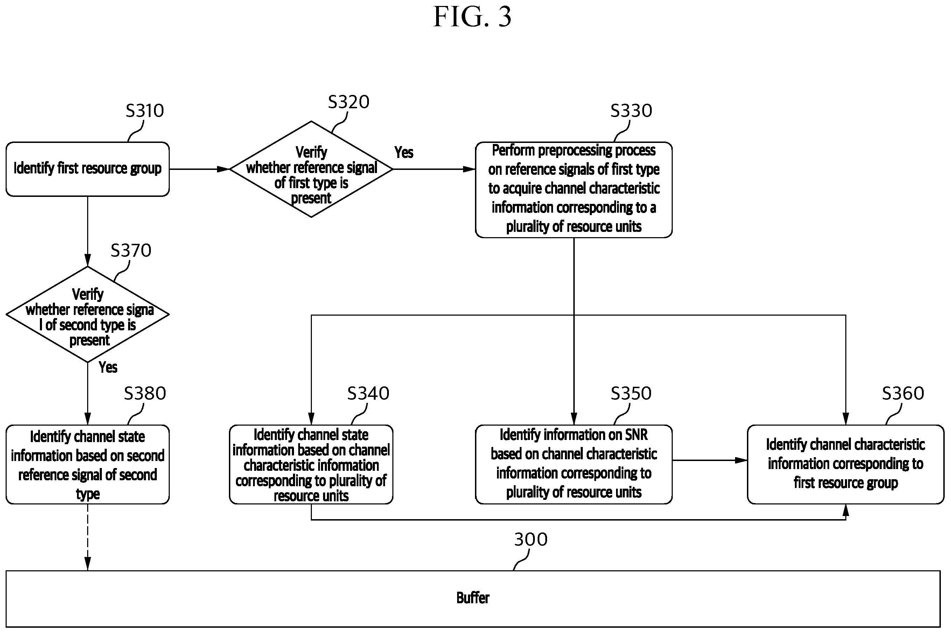

FIG. 3 is a diagram illustrating a process of estimating, by the terminal 100, channel characteristic information based on a reference signal according to an example embodiment. Content overlapping the examples described with reference to FIG. 2 will be briefly described or omitted for conciseness.

In operation S310, the terminal 100 may identify a first resource group. For example, the terminal 100 may identify the first resource group allocated based on instruction information received from the base station 200.

In operation S320, the terminal 100 may verify whether a reference signal of a first type is present. For example, the terminal 100 may identify a plurality of resource units in which the reference signal of the first type is located in the first resource group allocated based on reference signal configuration information. Subsequently, the terminal 100 may verify whether the reference signal of the first type is transmitted on the plurality of resource units.

In operation S330, the terminal 100 may perform a preprocessing process on the reference signals of the first type to acquire channel characteristic information corresponding to a plurality of resource units. For example, when the reference signal of the first type is identified in operation S320, the terminal 100 may acquire channel characteristic information corresponding to resource units in which the reference signals of the first type are transmitted, and perform a code division multiplexing restoration process on the reference signals of the first type, thereby acquiring the channel characteristic information corresponding to the plurality of resource units in which the plurality of first reference signals is transmitted.

In operation S340, the terminal 100 may identify channel state information based on the channel characteristic information corresponding to the plurality of resource units. For example, based on the channel characteristic information corresponding to the plurality of resource units determined in operation S330, the terminal 100 may determine information on a first phase change value on a time axis according to a frequency offset, information on a second phase change value on a frequency axis according to a timing offset, information on a delay spread, information on a channel power delay profile, information on a first channel correlation matrix on the frequency axis, information on a Doppler spread, and information on a second channel correlation matrix on the time axis.

In operation S350, the terminal 100 may identify information on an SNR based on the channel characteristic information corresponding to the plurality of resource units. For example, the terminal 100 may determine the information on the SNR based on the channel characteristic information corresponding to the plurality of resource units determined in operation S330.

In operation S360, the terminal 100 may identify channel characteristic information corresponding to the first resource group. For example, in an embodiment, the terminal 100 may identify the channel characteristic information based on the channel characteristic information corresponding to the plurality of resource units, the channel state information, and the information on the SNR. For example, the terminal 100 may identify that an amount of time used to determine the channel state information and the information on the SNR in operation S340 and operation S350 is less than a set threshold. Accordingly, the terminal 100 may identify the channel characteristic information corresponding to the first resource group based on the channel characteristic information acquired in operation S330, the channel state information determined in operation S340, and the information on the SNR determined in operation S350.

In operation S370, the terminal 100 may verify whether a reference signal of a second type is present. For example, the terminal 100 may identify a resource unit in which the reference signal of the second type is located in the first resource group allocated based on the reference signal configuration information. Subsequently, the terminal 100 may verify whether the reference signal of the second type is transmitted on the identified resource unit.

In operation S380, the terminal 100 may identify channel state information based on a second reference signal of the second type (e.g., the reference signal of the second type from operation S370) according to an example embodiment. For example, when the second reference signal of the second type is identified in operation S370, the terminal 100 may determine, based on the second reference signal, the information on the delay spread, the information on the channel power delay profile, the information on the first channel correlation matrix on the frequency axis, the information on the Doppler spread, the information on the second channel correlation matrix on the time axis, and the information on the SNR. Subsequently, the terminal 100 may store, in a buffer 300, the information on the delay spread, the information on the channel power delay profile, the information on the first channel correlation matrix on the frequency axis, the information on the Doppler spread, the information on the second channel correlation matrix on the time axis, and the information on the SNR.

FIG. 3 illustrates operations performed by the terminal 100. However, FIG. 3 and the above description is not intended to suggest any particular order of the operations S320-S380. For example, in an embodiment, the terminal 100 may perform operation S370 and operation S380 after performing operations S320 through S360. In some embodiments, the terminal 100 may perform operations S320 through S360 after performing operation S370 and operation S380 or may perform operations S320 through S360 along with operation S370 and operation S380.

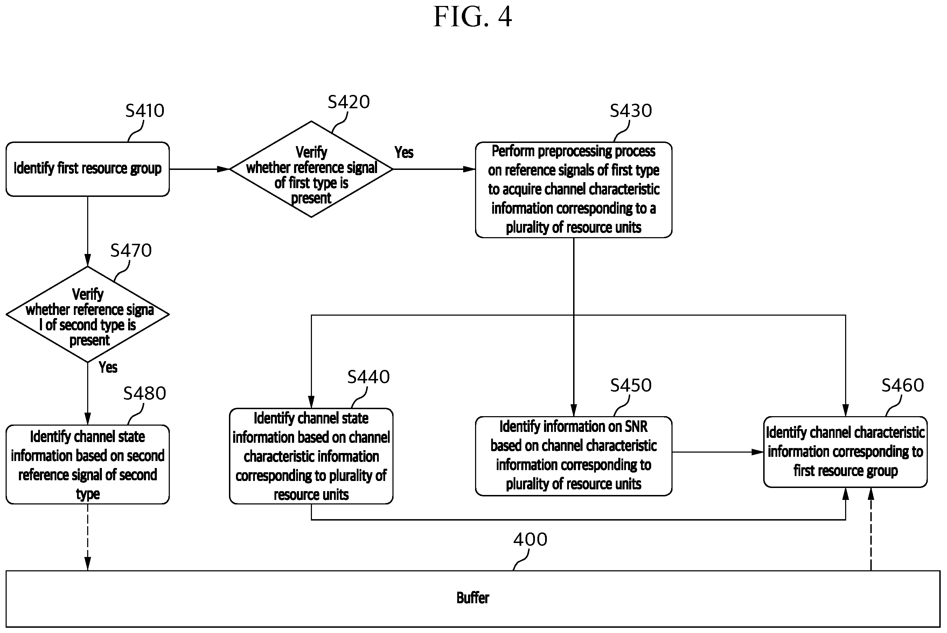

FIG. 4 is a diagram illustrating a process of estimating, by the terminal 100, channel characteristic information based on a reference signal according to an example embodiment. Content overlapping the examples described with reference to FIG. 2 will be briefly described or omitted for conciseness.

In operation S410, the terminal 100 may identify a first resource group. For example, the terminal 100 may identify the first resource group allocated based on instruction information received from the base station 200.

In operation S420, the terminal 100 may verify whether a reference signal of a first type is present. For example, the terminal 100 may identify a plurality of resource units in which the reference signal of the first type is located in the first resource group allocated based on reference signal configuration information. Subsequently, the terminal 100 may verify whether the reference signal of the first type is transmitted on the plurality of resource units.

In operation S430, the terminal 100 may perform a preprocessing process on the reference signals of the first type to acquire the channel characteristic information corresponding to the plurality of resource units. For example, when the reference signal of the first type is identified in operation S420, the terminal 100 may acquire channel characteristic information corresponding to resource units in which the reference signals of the first type are transmitted, and perform a code division multiplexing restoration process on the reference signals of the first type, thereby acquiring the channel characteristic information corresponding to the plurality of resource units in which the plurality of first reference signals is transmitted.

In operation S440, the terminal 100 may identify channel state information based on the channel characteristic information corresponding to the plurality of resource units. For example, based on the channel characteristic information corresponding to the plurality of resource units determined in operation S430, the terminal 100 may determine information on a first phase change value on a time axis according to a frequency offset, information on a second phase change value on a frequency axis according to a timing offset, information on a delay spread, information on a channel power delay profile, information on a first channel correlation matrix on the frequency axis, information on a Doppler spread, and information on a second channel correlation matrix on the time axis.

In operation S450, the terminal 100 may identify information on an SNR based on the channel characteristic information corresponding to the plurality of resource units. For example, the terminal 100 may determine the information on the SNR based on the channel characteristic information corresponding to the plurality of resource units determined in operation S430.

In operation S460, the terminal 100 may identify channel characteristic information corresponding to the first resource group. For example, in an embodiment, the terminal 100 may identify the channel characteristic information based on the channel characteristic information corresponding to the plurality of resource units, the channel state information, the information on the SNR, and channel state information read from the buffer 400. For example, the terminal 100 may identify that an amount of time used to determine at least one piece of channel state information among pieces of the channel state information in operation S440 is greater than a threshold. Accordingly, the terminal 100 may identify at least one piece of the channel state information determined based on the reference signal of the second type, which is stored in a buffer 400. Subsequently, the terminal 100 may identify the channel characteristic information corresponding to the first resource group based on the channel characteristic information determined in operation S430, the channel state information determined in operation S440, the information on the SNR determined to be within the threshold in operation S450, and at least one piece of the channel state information read from the buffer 400.

In operation S470, the terminal 100 may verify whether a reference signal of a second type is present. For example, the terminal 100 may identify a resource unit in which the reference signal of the second type is located in the first resource group allocated based on the reference signal configuration information. Subsequently, the terminal 100 may verify whether the reference signal of the second type is transmitted on the identified resource unit.

In operation S480, the terminal 100 may identify channel state information based on a second reference signal of the second type (e.g., the reference signal of the second type from operation S470). For example, when the second reference signal of the second type is identified in operation S470, the terminal 100 may determine, based on the second reference signal, the information on the delay spread, the information on the channel power delay profile, the information on the first channel correlation matrix on the frequency axis, the information on the Doppler spread, the information on the second channel correlation matrix on the time axis, and the information on the SNR. Subsequently, the terminal 100 may store, in the buffer 400, the information on the delay spread, the information on the channel power delay profile, the information on the first channel correlation matrix on the frequency axis, the information on the Doppler spread, the information on the second channel correlation matrix on the time axis, and the information on the SNR.

FIG. 4 illustrates operations performed by the terminal 100. However, FIG. 4 and the above description is not intended to suggest any particular order of the operations S420-S480. For example, in an embodiment, the terminal 100 may perform operation S470 and operation S480 after performing operations S420 through S460. In some embodiments, the terminal 100 may perform operations S420 through S460 after performing operation S470 and operation S480 or may perform operations S420 through S460 along with operation S470 and operation S480.

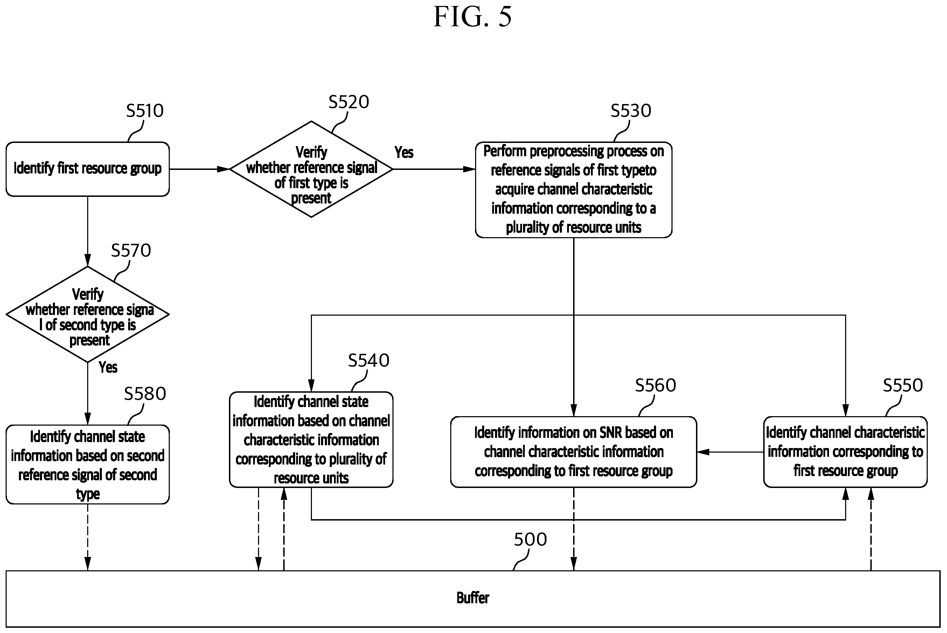

FIG. 5 is a diagram illustrating a process of estimating, by the terminal 100, channel characteristic information based on a reference signal according to an example embodiment. Content overlapping the examples described with reference to FIG. 2 will be briefly described or omitted for conciseness.

In operation S510, the terminal 100 may identify a first resource group. For example, the terminal 100 may identify the first resource group allocated based on instruction information received from the base station 200.

In operation S520, the terminal 100 may verify whether a reference signal of a first type is present. For example, the terminal 100 may identify a plurality of resource units in which the reference signal of the first type is located in the first resource group allocated based on reference signal configuration information. Subsequently, the terminal 100 may verify whether the reference signal of the first type is transmitted on the plurality of resource units.

In operation S530, the terminal 100 may perform a preprocessing process on the reference signals of the first type to acquire channel characteristic information of a plurality of resource units. For example, when the reference signal of the first type is identified in operation S520, the terminal 100 may acquire channel characteristic information corresponding to resource units in which the reference signals of the first type are transmitted, and perform a code division multiplexing restoration process on the reference signals of the first type, thereby acquiring the channel characteristic information corresponding to the plurality of resource units in which the plurality of first reference signals is transmitted.

In operation S540, the terminal 100 may identify channel state information based on the channel characteristic information corresponding to the plurality of resource units. For example, based on the channel characteristic information corresponding to the plurality of resource units determined in operation S530, the terminal 100 may determine information on a first phase change value on a time axis according to a frequency offset, information on a second phase change value on a frequency axis according to a timing offset, information on a delay spread, information on a channel power delay profile, information on a first channel correlation matrix on the frequency axis, information on a Doppler spread, and information on a second channel correlation matrix on the time axis. The terminal 100 may store, in a buffer 500, the information on the delay spread, the information on the channel power delay profile, the information on the first channel correlation matrix on the frequency axis, the information on the Doppler spread, and the information on the second channel correlation matrix on the time axis.

In operation S550, the terminal 100 may identify the channel characteristic information corresponding to the first resource group. For example, the terminal 100 may read information on the SNR that is previously stored in the buffer 500 based on configuration information. Subsequently, the terminal 100 may identify the channel characteristic information corresponding to the first resource group based on the channel characteristic information determined in operation S530, the channel state information determined in operation S540, and the information on the SNR read from the buffer 500.

In operation S560, the terminal 100 may identify the information on the SNR based on the channel characteristic information corresponding to the first resource group. For example, the terminal 100 may determine the information on the SNR based on the channel characteristic information corresponding to the first resource group determined in operation S550 and channel characteristic information corresponding to the plurality of resource units acquired in operation S530. Subsequently, the terminal 100 may store the information on the SNR in the buffer 500.

In operation S570, the terminal 100 may verify whether a reference signal of a second type is present. For example, the terminal 100 may identify a resource unit in which the reference signal of the second type is located in the first resource group allocated based on the reference signal configuration information. Subsequently, the terminal 100 may verify whether the reference signal of the second type is transmitted on the identified resource unit.

In operation S580, the terminal 100 may identify channel state information based on a second reference signal of the second type (e.g., the reference signal of the second type from operation S570). For example, when the second reference signal of the second type is identified in operation S570, the terminal 100 may determine, based on the second reference signal, the information on the delay spread, the information on the channel power delay profile, the information on the first channel correlation matrix on the frequency axis, the information on the Doppler spread, the information on the second channel correlation matrix on the time axis, and the information on the SNR. Subsequently, the terminal 100 may store, in the buffer 500, the information on the delay spread, the information on the channel power delay profile, the information on the first channel correlation matrix on the frequency axis, the information on the Doppler spread, the information on the second channel correlation matrix on the time axis, and the information on the SNR.

FIG. 5 illustrates operations performed by the terminal 100. However, FIG. 5 and the above description is not intended to suggest any particular order of the operations S520-S580. For example, in an embodiment, the terminal 100 may perform operation S570 and operation S580 after performing operations S520 through S560. In some embodiments, the terminal 100 may perform operations S520 through S560 after performing operation S570 and operation S580 or may perform operations S520 through S560 along with operation S570 and operation S580.

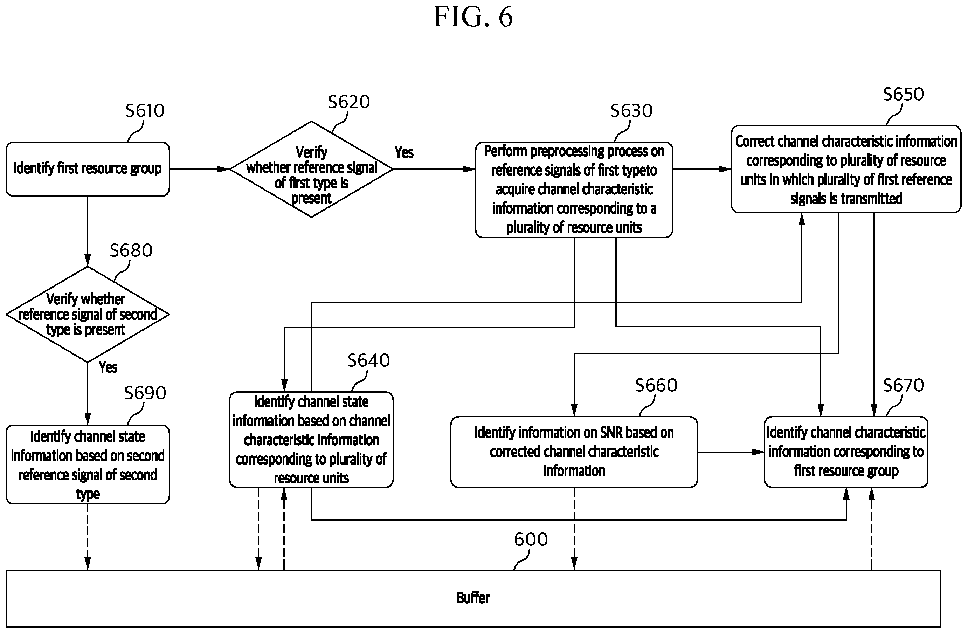

FIG. 6 is a diagram illustrating a process of estimating, by the terminal 100, channel characteristic information based on a reference signal according to an example embodiment. Content overlapping the examples described with reference to FIG. 2 will be briefly described or omitted for conciseness.

In operation S610, the terminal 100 may receive a first resource group. For example, the terminal 100 may identify the first resource group allocated based on instruction information received from the base station 200.

In operation S620, the terminal 100 may verify whether a reference signal of a first type is present. For example, the terminal 100 may identify a plurality of resource units in which the reference signal of the first type is located in the first resource group allocated based on reference signal configuration information. Subsequently, the terminal 100 may verify whether the reference signal of the first type is transmitted on the plurality of resource units.

In operation S630, the terminal 100 may perform a preprocessing process on the reference signals of the first type to acquire channel characteristic information corresponding to a plurality of resource units. For example, when the reference signal of the first type is identified in operation S620, the terminal 100 may acquire channel characteristic information corresponding to resource units in which the reference signals of the first type are transmitted, and may perform a code division multiplexing restoration process on the reference signals of the first type, thereby acquiring the channel characteristic information corresponding to the plurality of resource units in which the plurality of first reference signals is transmitted.

In operation S640, the terminal 100 may identify channel state information based on the channel characteristic information corresponding to the plurality of resource units. For example, based on the channel characteristic information corresponding to the plurality of resource units, the terminal 100 may determine information on a first phase change value on a time axis according to a frequency offset, information on a second phase change value on a frequency axis according to a timing offset, information on a delay spread, information on a channel power delay profile, information on a first channel correlation matrix on the frequency axis, information on a Doppler spread, and information on a second channel correlation matrix on the time axis. The terminal 100 may store, in a buffer 600, the information on the delay spread, the information on the channel power delay profile, the information on the first channel correlation matrix on the frequency axis, the information on the Doppler spread, and the information on the second channel correlation matrix on the time axis.

In operation S650, the terminal 100 may correct the channel characteristic information corresponding to the plurality of resource units in which the plurality of first reference signals is transmitted. For example, the terminal 100 may determine a covariance matrix based on the first channel correlation matrix on the frequency axis and the second channel correlation matrix on the time axis determined in operation S640 and use an MMSE technique based on the covariance matrix to minimize an estimation offset of the channel characteristic information.

In operation S660, the terminal 100 may identify information on an SNR based on the corrected channel characteristic information. For example, the terminal 100 may determine the information on the SNR based on the channel characteristic information corrected in operation S650. Subsequently, the terminal 100 may store the information on the SNR in the buffer 600.

In operation S670, the terminal 100 may identify channel characteristic information corresponding to the first resource group. For example, the terminal 100 may identify the channel characteristic information corresponding to the first resource group based on the channel state information determined in operation S640, the channel characteristic information determined in operation S630 or the channel characteristic information corrected in operation S650, and the information on the SNR determined in operation S660.

In operation S680, the terminal 100 may verify whether the reference signal of the second type is present. For example, the terminal 100 may identify a resource unit in which the reference signal of the second type is located in the first resource group allocated based on reference signal configuration information. Subsequently, the terminal 100 may verify whether the reference signal of the second type is transmitted on the identified resource unit.

In operation S690, the terminal 100 may identify channel state information based on the second reference signal of the second type (e.g., the reference signal of the second type from operation S680). For example, when the second reference signal of the second type is identified in operation S680, the terminal 100 may determine, based on the second reference signal, the information on the delay spread, the information on the channel power delay profile, the information on the first channel correlation matrix on the frequency axis, the information on the Doppler spread, the information on the second channel correlation matrix on the time axis, and the information on the SNR. Subsequently, the terminal 100 may store, in the buffer 600, the information on the delay spread, the information on the channel power delay profile, the information on the first channel correlation matrix on the frequency axis, the information on the Doppler spread, the information on the second channel correlation matrix on the time axis, and the information on the SNR.

FIG. 6 illustrates operations performed by the terminal 100. However, FIG. 6 and the above description is not intended to suggest any particular order of the operations S620-S690. For example, in an embodiment, the terminal 100 may perform operation S680 and operation S690 after performing operations S620 through S670, and this is merely an example. In some embodiments, the terminal 100 may perform operations S620 through S670 after performing operation S680 and operation S690 or may perform operations S620 through S670 along with operation S680 and operation S690.

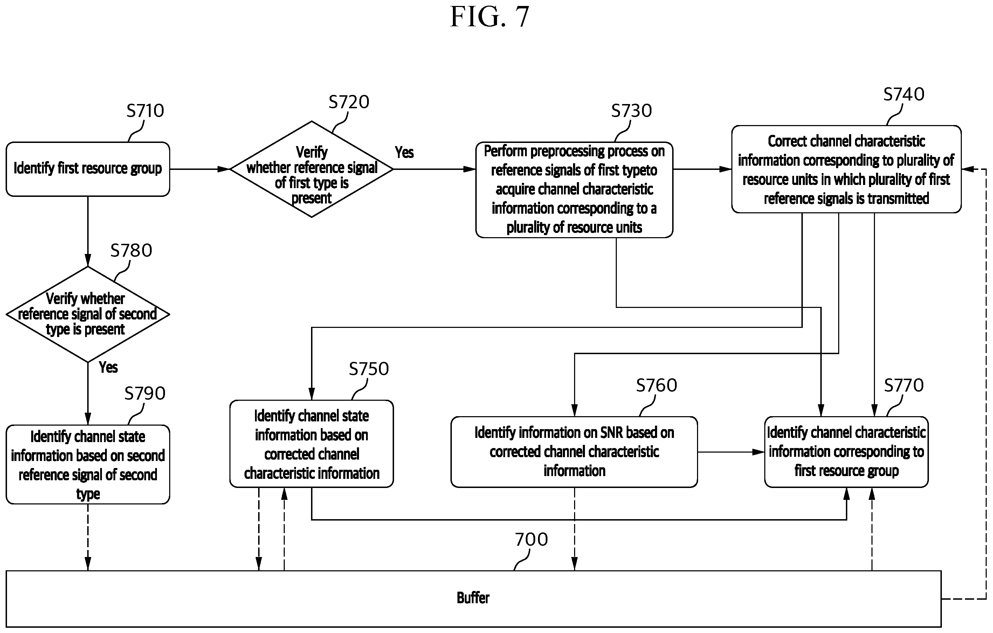

FIG. 7 is a diagram illustrating a process of estimating, by the terminal 100, channel characteristic information based on a reference signal according to an example embodiment. Content overlapping the examples described with reference to FIG. 2 will be briefly described or omitted for conciseness.

In operation S710, the terminal 100 may identify a first resource group. For example, the terminal 100 may identify the first resource group allocated based on instruction information received from the base station 200.

In operation S720, the terminal 100 may verify whether a reference signal of a first type is present. For example, the terminal 100 may identify a plurality of resource units in which the reference signal of the first type is located in the first resource group allocated based on reference signal configuration information. Subsequently, the terminal 100 may verify whether the reference signal of the first type is transmitted on the plurality of resource units.

In operation S730, the terminal 100 may perform a preprocessing process on the reference signals of the first type to acquire channel characteristic information corresponding to a plurality of resource units. For example, when the reference signal of the first type is identified in operation S720, the terminal 100 may acquire channel characteristic information corresponding to resource units in which the reference signals of the first type are transmitted, and may perform a code division multiplexing restoration process on the reference signals of the first type, thereby acquiring the channel characteristic information corresponding to the plurality of resource units in which the plurality of first reference signals is transmitted.

In operation S740, the terminal 100 may correct the channel characteristic information corresponding to the plurality of resource units in which the plurality of first reference signals is transmitted. For example, the terminal 100 may determine a covariance matrix based on a first channel correlation matrix on a frequency axis and a second channel correlation matrix on a time axis stored in a buffer 700 and use the MMSE technique based on the covariance matrix to minimize an estimation offset of the channel characteristic information.

In this example, the first channel correlation matrix on the frequency axis and the second channel correlation matrix on the time axis stored in the buffer 700 may include information determined based on the reference signal of the first type transmitted on the second resource group allocated to the terminal 100 before the first resource group but embodiments are not limited thereto.

In operation S750, the terminal 100 may identify channel state information based on the corrected channel characteristic information. For example, based on the channel characteristic information corrected in operation S740, the terminal 100 may determine information on a first phase change value on a time axis according to a frequency offset, information on a second phase change value on a frequency axis according to a timing offset, information on a delay spread, information on a channel power delay profile, information on a first channel correlation matrix on the frequency axis, information on a Doppler spread, and information on a second channel correlation matrix on the time axis. Subsequently, the terminal 100 may store, in the buffer 700, the information on the delay spread, the information on the channel power delay profile, the information on the first channel correlation matrix on the frequency axis, the information on the Doppler spread, and the information on the second channel correlation matrix on the time axis.

In operation S760, the terminal 100 may identify information on an SNR based on the corrected channel characteristic information. For example, the terminal 100 may determine the information on the SNR based on the channel characteristic information corrected in operation S740. Subsequently, the terminal 100 may store the information on the SNR in the buffer 700.

In operation S770, the terminal 100 may identify channel characteristic information corresponding to the first resource group. For example, the terminal 100 may identify the channel characteristic information corresponding to the first resource group based on the channel characteristic information determined in operation S730 or the channel characteristic information corrected in operation S740, the channel state information determined in operation S750, and the information on the SNR determined in operation S760.

In operation S780, the terminal 100 may verify whether the reference signal of the second type is present. For example, the terminal 100 may identify a resource unit in which the reference signal of the second type is located in the first resource group allocated based on reference signal configuration information. Subsequently, the terminal 100 may verify whether the reference signal of the second type is transmitted on the identified resource unit.

In operation S790, the terminal 100 may identify channel state information based on a second reference signal of the second type (e.g., the reference signal of the second type from operation S780). For example, when the second reference signal of the second type is identified in operation S780, the terminal 100 may determine, based on the second reference signal, the information on the delay spread, the information on the channel power delay profile, the information on the first channel correlation matrix on the frequency axis, the information on the Doppler spread, the information on the second channel correlation matrix on the time axis, and the information on the SNR. Subsequently, the terminal 100 may store, in the buffer 700, the information on the delay spread, the information on the channel power delay profile, the information on the first channel correlation matrix on the frequency axis, the information on the Doppler spread, the information on the second channel correlation matrix on the time axis, and the information on the SNR.

FIG. 7 illustrates operations performed by the terminal 100. However, FIG. 7 and the above description is not intended to suggest any particular order of the operations S720-S790. For example, in an embodiment, the terminal 100 may perform operation S780 and operation S790 after performing operations S720 through S770. In some embodiments, the terminal 100 may perform operations S720 through S770 after performing operation S780 and operation S790 or may perform operations S720 through S770 along with operation S780 and operation S790.

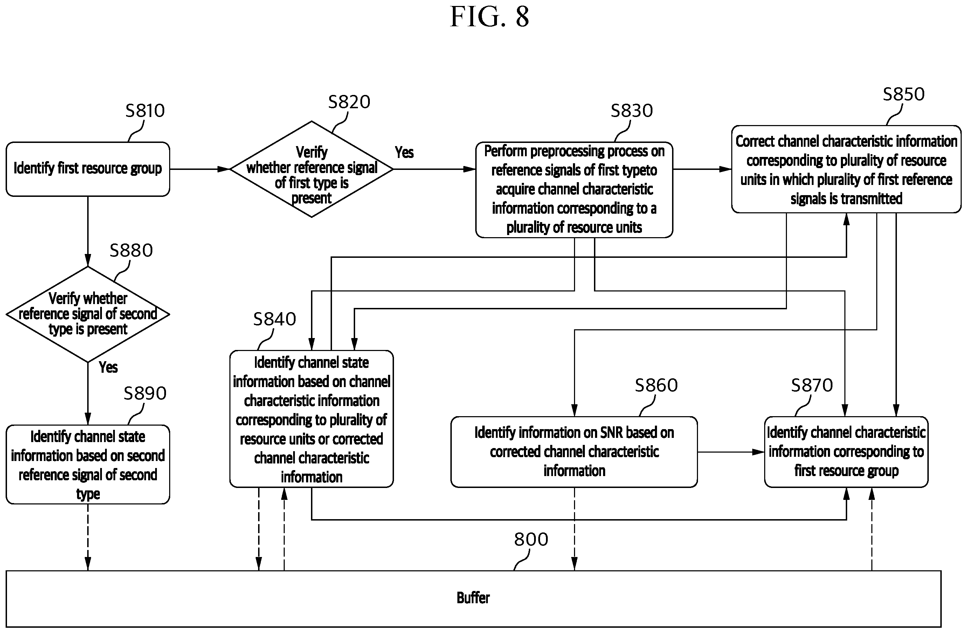

FIG. 8 is a diagram illustrating a process of estimating, by the terminal 100, channel characteristic information based on a reference signal according to an example embodiment. Content overlapping the examples described with reference to FIG. 2 will be briefly described or omitted for conciseness.

In operation S810, the terminal 100 may identify a first resource group. For example, the terminal 100 may identify the first resource group allocated based on instruction information received from the base station 200.

In operation S820, the terminal 100 may verify whether a reference signal of a first type is present. For example, the terminal 100 may identify a plurality of resource units in which the reference signal of the first type is located in the first resource group allocated based on reference signal configuration information. Subsequently, the terminal 100 may verify whether the reference signal of the first type is transmitted on the plurality of resource units.

In operation S830, the terminal 100 may perform a preprocessing process on the reference signals of the first type to acquire channel characteristic information corresponding to the plurality of resource units. For example, when the reference signal of the first type is identified in operation S820, the terminal 100 may acquire channel characteristic information corresponding to resource units in which the reference signals of the first type are transmitted, and may perform a code division multiplexing restoration process on the reference signals of the first type, thereby acquiring the channel characteristic information corresponding to the plurality of resource units in which the plurality of first reference signals is transmitted.

In operation S840, the terminal 100 may identify channel state information based on the channel characteristic information corresponding to the plurality of resource units or corrected channel characteristic information. For example, the terminal 100 may determine, based on the channel characteristic information corresponding to the plurality of resource units determined in operation S830, information on a first phase change value on a time axis according to a frequency offset, information on a second phase change value on a frequency axis according to a timing offset, information on a delay spread, information on a channel power delay profile, information on a first channel correlation matrix on the frequency axis, information on a Doppler spread, and information on a second channel correlation matrix on the time axis. Subsequently, the terminal 100 may redetermine, based on channel characteristic information corrected in operation S850 based on the channel state information determined in operation S840, the information on the first phase change value on the time axis according to the frequency offset, the information on the second phase change value on the frequency axis according to the timing offset, the information on the delay spread, the information on the channel power delay profile, the information on the first channel correlation matrix on the frequency axis, the information on the Doppler spread, and the information on the second channel correlation matrix on the time axis. Subsequently, the terminal 100 may store, in a buffer 800, the information on the delay spread, the information on the channel power delay profile, the information on the first channel correlation matrix on the frequency axis, the information on the Doppler spread, and the information on the second channel correlation matrix on the time axis.

In operation S850, the terminal 100 may correct the channel characteristic information corresponding to the plurality of resource units in which the plurality of first reference signals is transmitted. For example, the terminal 100 may determine a covariance matrix based on the first channel correlation matrix on the frequency axis and the second channel correlation matrix on the time axis determined in operation S840 and may use an MMSE technique based on the covariance matrix to minimize an estimation offset of the channel characteristic information.

In operation S860, the terminal 100 may identify information on an SNR based on the corrected channel characteristic information. For example, the terminal 100 may determine the information on the SNR based on the channel characteristic information corrected in operation S850. Subsequently, the terminal 100 may store the information on the SNR in the buffer 800.

In operation S870, the terminal 100 may identify channel characteristic information corresponding to the first resource group. For example, the terminal 100 may identify the channel characteristic information corresponding to the first resource group based on the channel characteristic information determined in operation S830 or the channel characteristic information corrected in operation S850, the channel state information redetermined in operation S840, and the information on the SNR determined in operation S860.

In operation S880, the terminal 100 may verify whether the reference signal of the second type is present. For example, the terminal 100 may identify a resource unit in which the reference signal of the second type is located in the first resource group allocated based on reference signal configuration information. Subsequently, the terminal 100 may verify whether the reference signal of the second type is transmitted on the identified resource unit.

In operation S890, the terminal 100 may identify channel state information based on a second reference signal of the second type (e.g., the reference signal of the second type from operation S880). For example, when the second reference signal of the second type is identified in operation S880, the terminal 100 may determine, based on the second reference signal, the information on the delay spread, the information on the channel power delay profile, the information on the first channel correlation matrix on the frequency axis, the information on the Doppler spread, the information on the second channel correlation matrix on the time axis, and the information on the SNR. Subsequently, the terminal 100 may store, in the buffer 800, the information on the delay spread, the information on the channel power delay profile, the information on the first channel correlation matrix on the frequency axis, the information on the Doppler spread, the information on the second channel correlation matrix on the time axis, and the information on the SNR.

FIG. 8 illustrates operations performed by the terminal 100. However, FIG. 8 and the above description is not intended to suggest any particular order of the operations S820-S890. For example, in an embodiment, the terminal 100 may perform operation S880 and operation S890 after performing operations S820 through S870, and this is merely an example. Instead, the terminal 100 may perform operations S820 through S870 after performing operation S880 and operation S890 or may perform operations S820 through S870 along with operation S880 and operation S890.

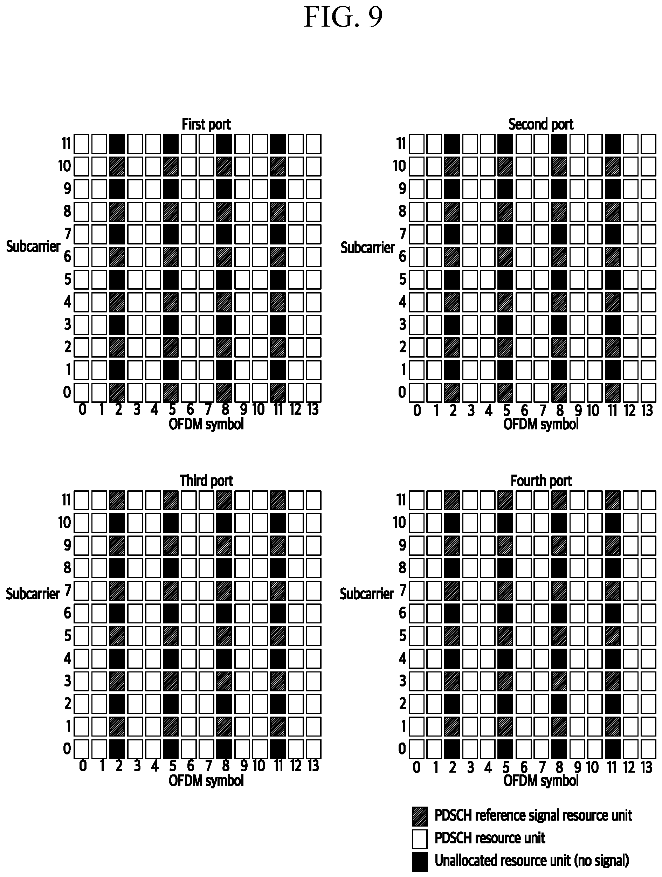

FIG. 9 is a diagram illustrating a process of identifying, by the terminal 100, a phase change on frequency and time axes according to an example embodiment. Content overlapping the examples described with reference to FIG. 2 will be briefly described or omitted for conciseness.

According to an example embodiment, the terminal 100 may identify a first resource group allocated based on instruction information. For example, the terminal 100 may receive DCI information including configuration information of the reference signal for channel estimation in a PDSCH from the base station 200. Subsequently, the terminal 100 may identify the first resource group allocated based on the received instruction information.

According to an example embodiment, the terminal 100 may identify a plurality of first reference signals of a first type for the first resource group. For example, referring to FIG. 9, the terminal 100 may identify that the reference signal of the first type is located in resource units corresponding to a second symbol, a fifth symbol, an eighth symbol, and an eleventh symbol in the first resource group allocated based on reference signal configuration information. Subsequently, the terminal 100 may identify the plurality of first reference signals of the first type transmitted on the resource units corresponding to the second symbol, the fifth symbol, the eighth symbol, and the eleventh symbol.

According to an example embodiment, the terminal 100 may perform a down modulation on signals on the time axis. For example, the terminal 100 may generate a subcarrier using an oscillator, multiply the generated subcarrier by the received signals on the time axis, and convert a result of the multiplication into a baseband signal.

According to an example embodiment, the terminal 100 may perform time synchronization and FFT on the received signals. For example, the terminal 100 may convert the received signal converted to baseband from the time domain to the frequency domain by performing a time synchronization process based on the OFDM symbol and then performing the FFT.

According to an example embodiment, the terminal 100 may identify channel characteristic information corresponding to the resource units in which the plurality of first reference signals is transmitted. For example, the terminal 100 may acquire 24 pieces of channel characteristic information transmitted on each of a first port, a second port, a third port, and a fourth port by comparing a reference signal transmitted by the base station 200 with a reference signal received by the terminal 100.

According to an example embodiment, the terminal 100 may acquire the channel characteristic information corresponding to the plurality of resource units in which the plurality of second reference signals is transmitted by performing a code division multiplexing restoration process on the plurality of first reference signals. For example, referring to FIG. 9, the terminal 100 may acquire 20 pieces of channel characteristic information transmitted on each of the first port, the second port, the third port, and the fourth port by performing despreading on the received plurality of first reference signals using an orthogonal cover code. The orthogonal cover code may be predefined.

According to an example embodiment, the terminal 100 may determine first channel state information based on the channel characteristic information corresponding to the plurality of resource units. Specifically, the terminal 100 may determine a first phase change value on the time axis according to the frequency offset based on 20 pieces of the channel characteristic information transmitted on each of the first port, the second port, the third port, and the fourth port.

For example, referring to FIG. 9, the terminal 100 may identify 60 resource unit pairs separated at a three-symbol distance among resource units transmitted on the first port, the second port, the third port, and the fourth port and may divide, by "3", a phase difference value between pieces of channel characteristic information corresponding to the 60 resource unit pairs, thereby identifying 60 phase change values per symbol interval. Subsequently, the terminal 100 may determine an average value of the 60 phase change values per symbol interval to be a representative value of the phase change values per symbol interval corresponding to a multiple "3."

Referring to FIG. 9, the terminal 100 may identify 40 resource unit pairs separated at a six-symbol distance among the resource units transmitted on the first port, the second port, the third port, and the fourth port and may divide, by "6", a phase difference value between pieces of channel characteristic information corresponding to the 40 resource unit pairs, thereby identifying 40 phase change values per symbol interval. Subsequently, the terminal 100 may determine an average value of the 40 phase change values per symbol interval to be a representative value of the phase change values per symbol interval corresponding to a multiple "6."

Referring to FIG. 9, the terminal 100 may identify 20 resource unit pairs separated at a nine-symbol distance among the resource units transmitted on the first port, the second port, the third port, and the fourth port and may divide, by "9", a phase difference value between pieces of channel characteristic information corresponding to the 20 resource unit pairs, thereby identifying 20 phase change values per symbol interval. Subsequently, the terminal 100 may determine an average value of the 20 phase change values per symbol interval to be a representative value of the phase change values per symbol interval corresponding to a multiple "9."

Subsequently, the terminal 100 may determine one of the representative value of the phase change values per symbol interval corresponding to the multiple "3", the representative value of the phase change values per symbol interval corresponding to the multiple "6", the representative value of the phase change values per symbol interval corresponding to the multiple "9", and an average value of the representative values of the phase change values per symbol interval corresponding to the multiples "3, "6" and "9" to be the first phase change value on the time axis according to the frequency offset.

According to an example embodiment, the terminal 100 may determine first channel state information based on the channel characteristic information corresponding to the plurality of resource units. Specifically, the terminal 100 may determine a second phase change value on the frequency axis according to the timing offset based on 20 pieces of the channel characteristic information transmitted on each of the first port, the second port, the third port, and the fourth port.

For example, referring to FIG. 9, the terminal 100 may identify 64 resource unit pairs separated at a two-subcarrier distance among the resource units transmitted on the first port, the second port, the third port, and the fourth port and may divide, by "2", a phase difference value between pieces of the channel characteristic information corresponding to the 64 resource unit pairs, thereby identifying 64 phase change values per subcarrier interval. Subsequently, the terminal 100 may determine an average value of the 64 phase change values per subcarrier interval to be a representative value of the phase change values per subcarrier interval corresponding to a multiple "2."

Referring to FIG. 9, the terminal 100 may identify 48 resource unit pairs separated at a four-subcarrier distance among the resource units transmitted on the first port, the second port, the third port, and the fourth port and may divide, by "4", a phase difference value between pieces of the channel characteristic information corresponding to the 48 resource unit pairs, thereby identifying 48 phase change values per subcarrier interval. Subsequently, the terminal 100 may determine an average value of the 48 phase change values per subcarrier interval to be a representative value of the phase change values per subcarrier interval corresponding to a multiple "4."

Referring to FIG. 9, the terminal 100 may identify 32 resource unit pairs separated at a six-subcarrier distance among the resource units transmitted on the first port, the second port, the third port, and the fourth port and may divide, by "6", a phase difference value between pieces of the channel characteristic information corresponding to the 32 resource unit pairs, thereby identifying 32 phase change values per subcarrier interval. Subsequently, the terminal 100 may determine an average value of the 32 phase change values per subcarrier interval to be a representative value of the phase change values per subcarrier interval corresponding to a multiple "6."

Referring to FIG. 9, the terminal 100 may identify 16 resource unit pairs separated at an eight-subcarrier distance among the resource units transmitted on the first port, the second port, the third port, and the fourth port and may divide, by "8", a phase difference value between pieces of the channel characteristic information corresponding to the 16 resource unit pairs, thereby identifying 16 phase change values per subcarrier interval. Subsequently, the terminal 100 may determine an average value of the 16 phase change values per subcarrier interval to be a representative value of the phase change values per subcarrier interval corresponding to a multiple "8."

Subsequently, the terminal 100 may determine one representative value of the representative value of the phase change values per subcarrier interval corresponding to the multiple "2", the representative value of the phase change values per subcarrier interval corresponding to the multiple "4", the representative value of the phase change values per subcarrier interval corresponding to the multiple "6", the representative value of the phase change values per subcarrier interval corresponding to the multiple "8", and an average value of the representative values of the phase change values per symbol interval corresponding to the multiples "2", "4", "6", and "8" to be the second phase change value on the frequency axis according to the timing offset.

However, it will be apparent to those skilled in the art that channel state information may be determined using various techniques such as the MMSE technique in addition to the method of determining the channel state information using the CDM despreading technique as described above.

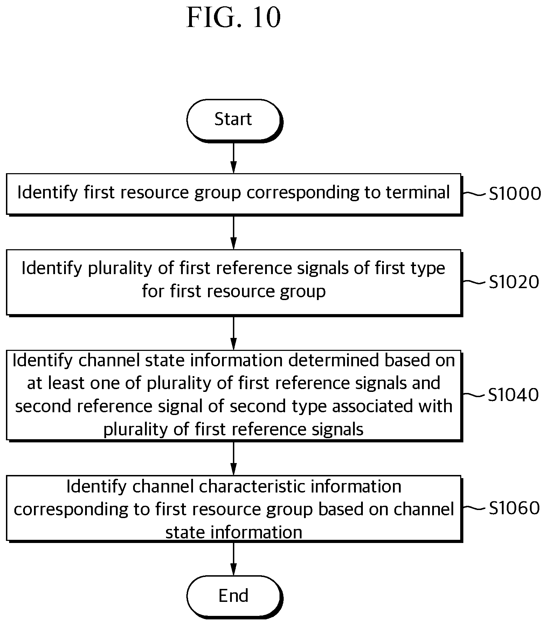

FIG. 10 is a flowchart illustrating an operation method of a terminal according to an example embodiment. The foregoing description can be applied to overlapping content and repeated description thereof will be omitted or described briefly for conciseness.

In operation S 1000, a terminal may identify a first resource group corresponding to the terminal.

In operation S1020, the terminal may identify a plurality of first reference signals of a first type transmitted in the first resource group.

In operation S1040, the terminal may identify channel state information determined based on at least one of a plurality of first reference signals or a second reference signal of a second type associated with the plurality of first reference signals.

According to an example embodiment, the channel state information may include at least one of information on a first phase change value on a time axis according to a frequency offset, information on a second phase change value on a frequency axis according to a timing offset, information on a delay spread, information on a channel power delay profile, first channel correlation matrix on the frequency axis, information on a Doppler spread, information on a second channel correlation matrix on the time axis, or information on an SNR.

According to an example embodiment, when identifying the channel state information, the terminal may identify a plurality of resource units in which the plurality of first reference signals is transmitted among resource units included in the first resource group, identify, for each of a plurality of multiples that is set, resource unit pairs spaced apart at symbol intervals of the plurality of multiples among the plurality of resource units, identify, for each of the plurality of multiples, phase change values per symbol interval based on a phase difference value between pieces of channel characteristic information corresponding to each of the resource unit pairs, identify, based on the phase change values per symbol interval identified for each of the plurality of multiples, representative values of the phase change values per symbol interval corresponding to the plurality of multiples, and determine the first phase change value based on the representative values of the phase change values per symbol interval corresponding to the plurality of multiples.

According to an example embodiment, when at least one of a first condition in which a value representing a distribution of the representative values of the phase change values per symbol interval corresponding to the plurality of multiples is identified to be greater than a first threshold, a second condition in which a value representing a distribution of phase change values per symbol interval identified for a first multiple among the plurality of multiples is identified to be greater than a second threshold, and a third condition in which a representative value of phase change values per symbol interval corresponding to a second multiple among the plurality of multiples is identified not to be included in a set first range is satisfied, the first phase change value may be determined to be zero. When the first condition, the second condition, and the third condition are not all satisfied, the first phase change value may be determined to be one of the representative values of the phase change values per symbol interval corresponding to the plurality of multiples and an average value of the representative values of the phase change values per symbol interval corresponding to the plurality of multiples.

According to an example embodiment, when a value representing a distribution of phase change values per symbol interval identified for a third multiple among the plurality of multiples is greater than a third threshold, a representative value of the phase change values per symbol interval corresponding to the third multiple may be excluded from values considered when the first phase change value is determined. When a representative value of phase change values per symbol interval corresponding to a fourth multiple among the plurality of multiples is not included in a set second range, the representative value of the phase change values per symbol interval corresponding to the fourth multiple may be excluded from values considered when the first phase change value is determined.

According to an example embodiment, when identifying the channel state information, the terminal may identify a plurality of resource units in which the plurality of first reference signals is transmitted among resource units included in the first resource group, identify, for each of a plurality of multiples that is set, resource unit pairs spaced apart at subcarrier intervals of the plurality of multiples among the plurality of resource units, identify, for each of the plurality of multiples, phase change values per subcarrier interval based on a phase difference value between pieces of channel characteristic information corresponding to each of the resource unit pairs, identify, based on the phase change values per subcarrier interval identified for each of the plurality of multiples, representative values of the phase change values per subcarrier interval corresponding to the plurality of multiples, and determine the second phase change value based on the representative values of the phase change values per subcarrier interval corresponding to the plurality of multiples.

According to an example embodiment, when at least one of a fourth condition in which a value representing a distribution of the representative values of the phase change values per subcarrier interval corresponding to the plurality of multiples is identified to be greater than a first threshold, a fifth condition in which a value representing a distribution of phase change values per subcarrier interval identified for a first multiple among the plurality of multiples is identified to be greater than a second threshold, and a sixth condition in which a representative value of phase change values per subcarrier interval corresponding to a second multiple among the plurality of multiples is identified not to be included in a set first range is satisfied, the second phase change value may be determined to be zero. When the fourth condition, the fifth condition, and the sixth condition are not satisfied, the second phase change value is determined to be one of the representative values of the phase change values per subcarrier interval corresponding to the plurality of multiples and an average value of the representative values of the phase change values per subcarrier interval corresponding to the plurality of multiples.

According to an example embodiment, when a value representing a distribution of phase change values per subcarrier interval identified for the third multiple among the plurality of multiples is greater than the third threshold, a representative value of the phase change values per subcarrier interval corresponding to the third multiple may be excluded from values considered when the second phase change value is determined. When a representative value of phase change values per subcarrier interval corresponding to the fourth multiple among the plurality of multiples is not included in a set second range, the representative value of the phase change values per subcarrier interval corresponding to the fourth multiple may be excluded from values considered when the second phase change value is determined.

According to an example embodiment, when identifying the channel state information, the terminal may identify channel characteristic information corresponding to a plurality of resource units in which a plurality of fourth reference signals is transmitted by performing a CDM restoration process on the plurality of first reference signals and identify the channel state information based on the channel characteristic information corresponding to the plurality of resource units.

According to an example embodiment, at least one of the information on the delay spread, the information on the channel power delay profile, the information on the first channel correlation matrix, the information on the Doppler spread, the information on the second channel correlation matrix, and the information on the SNR may be determined for each antenna port to which the plurality of fourth reference signals is mapped.

According to an example embodiment, when identifying the channel state information, the terminal may identify channel characteristic information corresponding to the plurality of resource units in which the plurality of fourth reference signals is transmitted by performing the CDM restoration process on the plurality of first reference signals, correct the channel characteristic information corresponding to the plurality of resource units based on at least one of the first channel correlation matrix and the second channel correlation matrix and identify the channel state information based on the corrected channel characteristic information corresponding to the plurality of resource units.

According to an example embodiment, when identifying the channel state information, the terminal may identify, in a database, information on a plurality of fifth reference signals of the first type transmitted in a second resource group that is previous to the first resource group and identify, based on the plurality of first reference signals and the plurality of fifth reference signals, at least one of the information on the delay spread, the information on the channel power delay profile, the information on the first channel correlation matrix, the information on the Doppler spread, the information on the second channel correlation matrix, and the information on the SNR.

According to an example embodiment, when identifying the channel state information, the terminal may identify an amount of time required to determine at least one of the information on the delay spread, the information on the channel power delay profile, the information on the first channel correlation matrix, the information on the Doppler spread, the information on the second channel correlation matrix, and the information on the SNR based on the plurality of first reference signals. When the amount of time is less than or equal to a fourth threshold, the terminal may determine at least one of the information on the delay spread, the information on the channel power delay profile, the information on the first channel correlation matrix, the information on the Doppler spread, the information on the second channel correlation matrix, and the information on the SNR based on the plurality of first reference signals. When the amount of time is greater than the fourth threshold, the terminal may identify, in a database, at least one of the information on the delay spread, the information on the channel power delay profile, the information on the first channel correlation matrix, the information on the Doppler spread, the information on the second channel correlation matrix, and the information on the SNR determined based on the second reference signal.

In operation S1060, the terminal may identify channel characteristic information corresponding to the first resource group based on the channel state information.

According to an example embodiment, when identifying the channel characteristic information corresponding to the first resource group, the terminal may identify, among resource units included in the first resource group, a first resource unit and a second resource unit in which a third reference signal is transmitted among the plurality of first reference signals, identify channel characteristic information corresponding to the second resource unit based on the third reference signal, identify a first symbol index and a first subcarrier index corresponding to the first resource unit, identify a second symbol index and a second subcarrier index corresponding to the second resource unit, and acquire the channel characteristic information corresponding to the first resource unit, by applying the first phase change value by the first symbol index and the second phase change value by the first subcarrier index to a value obtained by inputting, to a channel estimation algorithm, a value which is obtained by inversely applying the first phase change value by the second symbol index and inversely applying the second phase change value by the second subcarrier index to the channel characteristic information corresponding to the second resource unit.

According to an example embodiment, when identifying the channel characteristic information corresponding to the first resource group, the terminal may identify a plurality of resource units in which the plurality of first reference signals is transmitted among resource units included in the first resource group, identify channel characteristic information corresponding to the plurality of resource units by comparing the plurality of first reference signals and a defined plurality of fifth reference signals corresponding to the plurality of first reference signals, and correct the channel characteristic information corresponding to the plurality of resource units based on the information on the first channel correlation matrix.

According to an example embodiment, when different precoding is applied for each subcarrier included in the first resource group, the channel characteristic information corresponding to the first resource group may be determined based on the information on the first channel correlation matrix, and the information on the first channel correlation matrix may be determined based on at least one of the information on the delay spread and the information on the channel power delay profile.

According to an example embodiment, when identical precoding is applied to subcarriers included in the first resource group, the channel characteristic information corresponding to the first resource group may be determined based on at least one of the information on the delay spread and the information on the channel power delay profile.

According to an example embodiment, the terminal may identify a plurality of first symbol values for the first resource group, acquire a plurality of second symbol values in which channel distortion of the plurality of first symbol values is corrected based on the channel characteristic information corresponding to the first resource group, and acquire data by demodulating the plurality of second symbol values.

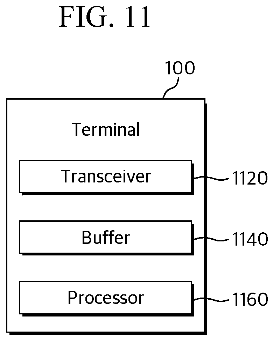

FIG. 11 is a block diagram illustrating the terminal 100 according to an example embodiment.

The terminal 100 may include a transceiver 1120, a buffer 1140, and a processor 1160. FIG. 11 illustrates the terminal 100 including elements related to the present example embodiment. However, it will be understood by those skilled in the art that other general components may be included in addition to the elements illustrated in FIG. 11. In an example embodiment, the transceiver 1120 may be included in a communication device. In an example embodiment, the processor 1160 may be included in a controller.

The transceiver 1120 may be a device that performs wired/wireless communication and may communicate with an external electronic device that is external to the terminal 100. The external electronic device may be a terminal or a server. In an embodiment, a communication technology used by the transceiver 1120 may include global system for mobile communication (GSM), code division multi access (CDMA), long term evolution (LTE), 5G, wireless local area network (WLAN), wireless-fidelity (Wi-Fi), Bluetooth^{™}, radio frequency identification (RFID), infrared data association (IrDA), ZigBee, near field communication (NFC), and/or the like.

The buffer 1140 may be an element that stores channel state information or channel characteristic information. The buffer 1140 may be included in a modem in the terminal 100 or included as an element of the transceiver 1120 or the processor 1160, but embodiments are merely an example. In some embodiments, the buffer 1140 may be located outside the modem.

The processor 1160 may control an overall operation of the terminal 100 and may process data and signals. The processor 1160 may be configured as at least one hardware unit. For example, in some embodiments, the processor 1160 may comprise a microprocessor or a microcontroller or hardware control logic configured to execute the operations S205 to S260 described above with respect to FIG. 2, the operations S310 to S380 described above with respect to FIG. 3, the operations S410 to S480 described above with respect to FIG. 4, the operation S510 to S580 described above with respect to FIG. 5, the operations S610 to S690 described above with respect to FIG. 6, the operations S710 to S790 described above with respect to FIG. 7, or the operations S810 to S890 described above with respect to FIG. 8. In some embodiments, the processor 1160 may be operated by one or more software modules generated by executing program code stored in the buffer 1140. For example, in some embodiments, the processor 1160 may access program code stored in the buffer 1140 and may execute the program code to cause the processor 1160 to implement the operations S205 to S260 described above with respect to FIG. 2, the operations S310 to S380 described above with respect to FIG. 3, the operations S410 to S480 described above with respect to FIG. 4, the operation S510 to S580 described above with respect to FIG. 5, the operations S610 to S690 described above with respect to FIG. 6, the operations S710 to S790 described above with respect to FIG. 7, or the operations S810 to S890 described above with respect to FIG. 8. The processor 1160 may include a memory. Thus, by executing program code stored in the memory, the processor 1160 may control an overall operation of the terminal 100 and process data and signals.

The processor 1160 may identify a first resource group corresponding to the terminal, identify a plurality of first reference signals of a first type for the first resource group, identify channel state information determined based on at least one of a second reference signal of a second type associated with the plurality of first reference signals or the plurality of first reference signals, and identify channel characteristic information corresponding to the first resource group based on the channel state information.

None of the description in this application should be read as implying that any particular element, step, or function is an essential element that must be included in the claim scope. Moreover, none of the claims is intended to invoke 35 U.S.C. § 112(f) unless the exact words "means for" are followed by a participle. Use of any other term, including without limitation "mechanism," "module," "device," "unit," "component," "element," "member," "apparatus," "machine," "system," "processor," or "controller," within a claim is understood by the Applicant to refer to hardware structures known to those skilled in the relevant art and is not intended to invoke 35 U.S.C. § 112(f).

The terminal according to the above-described example embodiments may include a processor, a memory that stores and executes program data, a permanent storage such as a disk drive, a communication port for communicating with an external device, and a user interface device such as a touch panel, a key, and a button. Methods implemented by software modules or algorithms may be stored in a computer-readable recording medium as computer-readable code or program instructions executable in the processor. Here, the computer-readable recording medium may include a magnetic storage medium (e.g., a read-only memory (ROM), a random-access memory (RAM), a floppy disk, a hard disk, or the like), an optical reading medium (e.g., a CD-ROM or a digital versatile disc (DVD)), or the like. The computer-readable recording medium may be dispersed to computer systems connected by a network so that computer-readable codes may be stored and executed in a dispersed manner. The medium may be read by a computer, stored in the memory, and executed by the processor.

The present example embodiments may be represented by functional blocks and various processing steps. These functional blocks may be implemented by various numbers of hardware and/or software configurations that execute specific functions. For example, the present example embodiments may adopt integrated circuit configurations such as a memory, a processor, a logic circuit, and a look-up table that may execute various functions by control of one or more microprocessors or other control devices. Similarly to that elements may be executed by software programming or software elements, the present example embodiments may be implemented by programming or scripting languages such as C, C++, Java, and assembler language, including various algorithms implemented by combinations of data structures, processes, routines, or of other programming configurations. Functional aspects may be implemented by algorithms executed by one or more processors. **In** addition, the present example embodiments may adopt the related art for electronic environment setting, signal processing, and/or data processing, for example. The terms "mechanism", "element", "means", and "configuration" may be widely used and are not limited to mechanical and physical components. These terms may include meaning of a series of routines of software in association with a processor.

The above-described embodiments are merely examples and other embodiments may be implemented within the scope of the following claims.

## Claims

1. An operation method, performed by a processor (1160) of a terminal (100), the operation method comprising:
identifying (S1000) a first resource group corresponding to the terminal (100);
identifying (S1020) a plurality of first reference signals of a first type for the first resource group;
identifying (S1040) channel state information, based on at least one of the plurality of first reference signals or based on a second reference signal of a second type that is associated with the plurality of first reference signals; and
identifying (S1060) channel characteristic information corresponding to the first resource group based on the channel state information.

2. The operation method of claim 1, wherein the channel state information includes at least one of:
information on a first phase change value on a time axis according to a frequency offset;
information on a second phase change value on a frequency axis according to a timing offset;
information on a delay spread;
information on a channel power delay profile;
information on a first channel correlation matrix on a frequency axis;
information on a Doppler spread;
information on a second channel correlation matrix on a time axis; or
information on a signal-to-noise ratio, SNR.

3. The operation method of claim 2, wherein identifying (S1040) the channel state information comprises:
identifying a plurality of resource units in which the plurality of first reference signals is transmitted among resource units that are included in the first resource group;
identifying, for each of a plurality of multiples, resource unit pairs that are spaced apart at symbol intervals of the multiple, among the plurality of resource units;
identifying, for each of the plurality of multiples, phase change values per symbol interval based on a phase difference value between pieces of channel characteristic information corresponding to each of the resource unit pairs;
identifying, based on the phase change values, representative values of the phase change values per symbol interval corresponding to the plurality of multiples; and
determining, as the channel state information, the first phase change value based on the representative values of the phase change values per symbol interval corresponding to the plurality of multiples.

4. The operation method of claim 3,
wherein when at least one of a first condition, a second condition, and a third condition is satisfied, the first phase change value is determined to be zero,
the first condition being that a value representing a distribution of the representative values of the phase change values per symbol interval corresponding to the plurality of multiples is greater than a first threshold,
the second condition being that a value representing a distribution of phase change values per symbol interval for a first multiple among the plurality of multiples is greater than a second threshold, and
the third condition being that a representative value of phase change values per symbol interval corresponding to a second multiple among the plurality of multiples is not included in a set first range, and
wherein when the first condition, the second condition, and the third condition are not satisfied, the first phase change value is determined to be one value of the representative values of the phase change values per symbol interval corresponding to the plurality of multiples and an average value of the representative values of the phase change values per symbol interval corresponding to the plurality of multiples.

5. The operation method of claim 3 or 4,
wherein when a value representing a distribution of phase change values per symbol interval for a third multiple among the plurality of multiples is greater than a third threshold, a representative value of the phase change values per symbol interval corresponding to the third multiple is excluded from values considered when the first phase change value is determined, and
wherein when a representative value of phase change values per symbol interval corresponding to a fourth multiple among the plurality of multiples is not included in a set second range, the representative value of the phase change values per symbol interval corresponding to the fourth multiple is excluded from values considered when the first phase change value is determined.

6. The operation method of claim 2, wherein identifying (S1040) the channel state information comprises:
identifying a plurality of resource units in which the plurality of first reference signals is transmitted among resource units included in the first resource group;
identifying, for each of a plurality of multiples, resource unit pairs that are spaced apart at subcarrier intervals of the plurality of multiples, among the plurality of resource units;
identifying, for each of the plurality of multiples, phase change values per subcarrier interval based on a phase difference value between pieces of channel characteristic information corresponding to each of the resource unit pairs;
identifying, based on the phase change values, representative values of the phase change values per subcarrier interval corresponding to the plurality of multiples; and
determining, as the channel state information, the second phase change value based on the representative values of the phase change values per subcarrier interval corresponding to the plurality of multiples.

7. The operation method of claim 6,
wherein when at least one of a fourth condition, a fifth condition, and a sixth condition is satisfied, the second phase change value is determined to be zero,
the fourth condition being that a value representing a distribution of the representative values of the phase change values per subcarrier interval corresponding to the plurality of multiples is greater than a first threshold,
the fifth condition being that a value representing a distribution of phase change values per subcarrier interval identified for a first multiple among the plurality of multiples is greater than a second threshold, and
the sixth condition being that a representative value of phase change values per subcarrier interval corresponding to a second multiple among the plurality of multiples is not included in a set first range, and
wherein when the fourth condition, the fifth condition, and the sixth condition are not satisfied, the second phase change value is determined to be one value of the representative values of the phase change values per subcarrier interval corresponding to the plurality of multiples and an average value of the representative values of the phase change values per subcarrier interval corresponding to the plurality of multiples.

8. The operation method of claim 6 or 7,
wherein when a value representing a distribution of phase change values per subcarrier interval for a third multiple among the plurality of multiples is greater than a third threshold, a representative value of the phase change values per subcarrier interval corresponding to the third multiple is excluded from values considered when the second phase change value is determined, and
wherein when a representative value of phase change values per subcarrier interval corresponding to a fourth multiple among the plurality of multiples is not included in a set second range, the representative value of the phase change values per subcarrier interval corresponding to the fourth multiple is excluded from values considered when the second phase change value is determined.

9. The operation method of any of claims 2 to 8, wherein identifying (S1060) the channel characteristic information corresponding to the first resource group comprises:
identifying, among resource units included in the first resource group, a first resource unit and a second resource unit in which a third reference signal is transmitted among the plurality of first reference signals;
identifying channel characteristic information corresponding to the second resource unit based on the third reference signal, identifying a first symbol index and a first subcarrier index corresponding to the first resource unit, and identifying a second symbol index and a second subcarrier index corresponding to the second resource unit; and
acquiring the channel characteristic information corresponding to the first resource unit, by applying the first phase change value by the first symbol index and the second phase change value by the first subcarrier index to a value obtained by inputting, to a channel estimation algorithm, a value which is obtained by inversely applying the first phase change value by the second symbol index and inversely applying the second phase change value by the second subcarrier index to the channel characteristic information corresponding to the second resource unit.

10. The operation method of claim 2, wherein identifying (S1040) the channel state information comprises:
identifying channel characteristic information corresponding to a plurality of resource units in which a plurality of fourth reference signals is transmitted by performing a code division multiplexing, CDM, restoration process on the plurality of first reference signals; and
identifying the channel state information based on the channel characteristic information corresponding to the plurality of resource units.

11. The operation method of claim 2, wherein identifying (S1040) the channel state information comprises:
identifying channel characteristic information corresponding to a plurality of resource units in which a plurality of fourth reference signals is transmitted by performing a code division multiplexing, CDM, restoration process on the plurality of first reference signals;
correcting (S850) the channel characteristic information corresponding to the plurality of resource units based on at least one of the first channel correlation matrix or the second channel correlation matrix; and
identifying (S840) the channel state information based on the corrected channel characteristic information corresponding to the plurality of resource units.

12. The operation method of claim 2, wherein identifying (S1040) the channel state information comprises:
identifying, in a database, information on a plurality of fifth reference signals of the first type transmitted in a second resource group that is transmitted previously to the first resource group; and
identifying, based on the plurality of first reference signals and the plurality of fifth reference signals, at least one of the information on the delay spread, the information on the channel power delay profile, the information on the first channel correlation matrix, the information on the Doppler spread, the information on the second channel correlation matrix, or the information on the SNR.

13. The operation method of claim 2, wherein identifying (S1040) the channel state information comprises:
identifying an amount of time used to determine at least one of the information on the delay spread, the information on the channel power delay profile, the information on the first channel correlation matrix, the information on the Doppler spread, the information on the second channel correlation matrix, or the information on the SNR based on the plurality of first reference signals; and
when the amount of time is less than or equal to a fourth threshold, determining at least one of the information on the delay spread, the information on the channel power delay profile, the information on the first channel correlation matrix, the information on the Doppler spread, the information on the second channel correlation matrix, or the information on the SNR based on the plurality of first reference signals, and
when the amount of time is greater than the fourth threshold, identifying, in a database, at least one of the information on the delay spread, the information on the channel power delay profile, the information on the first channel correlation matrix, the information on the Doppler spread, the information on the second channel correlation matrix, or the information on the SNR determined based on the second reference signal.

14. A terminal (100) comprising:
a transceiver (1120);
a buffer (1140); and
a processor (1160),
wherein the processor (1160) is configured to:
identify (S1000) a first resource group corresponding to the terminal (100),
identify (S1020) a plurality of first reference signals of a first type for the first resource group,
identify (S1040) channel state information determined based on at least one of the plurality of first reference signals or based on a second reference signal of a second type associated with the plurality of first reference signals, and
identify (S1060) channel characteristic information corresponding to the first resource group based on the channel state information.

15. A wireless communication system comprising:
a terminal (100) comprising a processor (1160) or hardware control logic; and
a base station (200),
wherein the base station (200) is configured to transmit, to the terminal (100), instruction information including information on a first resource group corresponding to the terminal (100), and
the processor (1160) or the hardware control logic of the terminal (100) is configured to:
identify (1000) the first resource group based on the instruction information received from the base station (200),
identify (1020) a plurality of first reference signals of a first type transmitted in the first resource group,
identify (1040) channel state information determined based on at least one of the plurality of first reference signals or based on a second reference signal of a second type having a quasi-colocated relationship with the plurality of first reference signals, and
identify (1060) channel characteristic information corresponding to the first resource group based on the channel state information.
